# NEUE EUROPÄISCHE PATENTSCHRIFT

(11) **EP 1 972 462 B2**
(45) Veröffentlichungstag und Bekanntmachung des Hinweises auf die Entscheidung über den Einspruch: **18.09.2019**
(45) Hinweis auf die Patenterteilung: 11.05.2011
(21) Anmeldenummer: 07025049.3
(22) Anmeldetag: 21.12.2007
(51) Int. Cl.: B41M 3/14, B42D 15/00, B42D 15/10, C09D 11/02, D21H 21/40, D21H 21/42

(54) **Verfahren zur Herstellung von Sicherheitsfolien, und Sicherheitsfolien**
Method for producing security foils, and security foils
Procédé de fabrication de feuilles de sécurité, et feuilles de sécurité

(30) Priorität: 05.01.2007 DE 102007001791; 19.11.2007 DE 102007055112
(43) Veröffentlichungstag der Anmeldung: 24.09.2008
(73) Patentinhaber: Giesecke+Devrient Currency Technology GmbH, 81677 München (DE)
(72) Erfinder: Krombholz, Markus, Dr., 83607 Holzkirchen (DE); Mang, Thomas, Dr., 83607 Holzkirchen (DE); Hoffmüller, Winfried, Dr., 83646 Bad Tölz (DE); Burchard, Theodor, Dr., 83703 Gmund (DE); Heim, Manfred, Dr., 81543 München (DE)
(74) Vertreter: Klunker IP Patentanwälte PartG mbB

(56) Entgegenhaltungen:
- EP-A1- 0 330 733
- EP-A1- 1 291 463
- EP-A1- 1 516 957
- EP-A2- 1 609 619
- WO-A1-02/31214
- WO-A1-92/11142
- WO-A1-97/23357
- WO-A1-99/13157
- WO-A2-03/091042
- DE-A- 4 041 025
- DE-A- 19 548 528
- DE-A- 19 739 193
- US-A- 4 242 378

## Beschreibung

Die Erfindung betrifft ein Verfahren zur Herstellung einer Sicherheitsfolie mit im Durchlicht und bevorzugt auch im Auflicht visuell erkennbaren Zeichen, eine mittels des Verfahrens hergestellte Sicherheitsfolie, die Verwendung dieser Sicherheitsfolie zur Produktsicherung, ein mit der Sicherheitsfolie ausgestattetes Wertdokument sowie ein Verfahren zur Herstellung eines derartigen Wertdokuments.

Sicherheitsfolien mit im Durchlicht, und gegebenenfalls auch im Auflicht, visuell erkennbaren Zeichen sind bekannt. Die Zeichen können beliebige Formen haben, wie Zahlen, Buchstaben, Muster, geometrische oder figürliche Darstellungen etc., und werden allgemein unabhängig von ihrer Form als "Negativschrift" bezeichnet. Die Sicherheitsfolien werden hergestellt, indem ein transparentes Substrat mit einer Beschichtung, im Allgemeinen einer metallischen Beschichtung, versehen wird, die dann an bestimmten Stellen wieder entfernt wird. Hält man die Sicherheitsfolie gegen das Licht, erscheinen die Bereiche mit metallischer oder sonstiger Beschichtung dunkel. Die Bereiche, an denen die Beschichtung entfernt wurde, erscheinen dagegen hell oder zumindest deutlich heller als die beschichteten Bereiche, je nach Transparenz des Substrats. Je transparenter, d. h. je lichtdurchlässiger, ein Substrat ist, desto ausgeprägter ist der Kontrast zwischen beschichteten und beschichtungsfreien Bereichen. Bei sehr transparenten Substraten ist die Negativschrift nicht nur im Durchlicht, sondern auch im Auflicht deutlich erkennbar.

Es wurden verschiedene Verfahren zur Entfernung der Beschichtung vorgeschlagen.

In WO 99/13157 (entspricht DE 197 39 193) wird ein "Waschverfahren" beschrieben, bei dem eine Trägerfolie mit einer Druckfarbe mit hohem Pigmentanteil in Form von Zeichen bedruckt, mit einer dünnen Abdeckschicht (z. B. aus Aluminium) beschichtet und anschließend die Druckfarbe mitsamt der darüber befindlichen Abdeckschicht durch Auswaschen mit einer Flüssigkeit entfernt wird, um beschichtungsfreie Bereiche in Form der Zeichen zu erzeugen. Wesentlich für das Verfahren ist die Tatsache, dass die Druckfarbe mit hohem Pigmentanteil nach dem Trocknen auf der Druckunterlage einen erhabenen Farbauftrag bildet, der eine poröse, porige Struktur mit großer Oberfläche besitzt. Wenn auf einen solchen Farbauftrag eine Abdeckschicht von nur geringer Dicke aufgebracht wird, führt dies zu keiner durchgehenden, flächendeckenden Beschichtung, so dass relativ leicht Lösungsmittel in den Farbkörper eindringen kann. Verwendet man für die Farbe ein lösliches Bindemittel, können der Farbauftrag und die daraufliegende Abdeckschicht mit einem geeigneten Lösungsmittel ausgewaschen werden. Mit dem Verfahren können Beschichtungen bis zu einer Dicke von 5 µm, insbesondere 1 µm entfernt werden.

Die WO 92/11142 (entspricht EP 0 516790) bzw. deren deutsche Prioritätsanmeldung DE 4 041 025 offenbart durch Wärmeeinwirkung aktivierbare Druckfarben, beispielsweise wachshaltige Emulsionen. Bei Erwärmung erweichen diese Emulsionen und verringern dadurch die Haftung zur Trägerfolie, so dass in diesen schlecht haftenden Bereichen, unterstützt durch mechanische Behandlung, wie z. B. Ultraschall, Abbürsten oder Abreiben, sowohl die erweichte Druckfarbe als auch die darüberliegenden Schichten entfernt werden können. Außerdem werden als aktivierbare Druckfarben Farben mit aufschäumenden Additiven, wie sie bei der Herstellung von Schaumstoffen üblich sind, offenbart. Diese Treibmittel spalten unter Wärmeeinwirkung Gas ab und erzeugen Schaumstrukturen. Dadurch vergrößert sich das Volumen der Druckfarbe, wodurch die Haftung an der Trägerfolie verringert wird und die über der Druckfarbe liegenden Schichten nach außen gewölbt werden, so dass sie einen guten Angriffspunkt für eine mechanische Entfernung bieten. Mit diesen Druckfarben sind dickere Schichtstärken entfernbar als gemäß WO 99/13157. Es wird angegeben, dass Beschichtungsstärken von bis zu etwa 7 µm entfernt werden können.

Die WO 97/23357 (entspricht DE 195 48 528 A) nimmt Bezug auf EP 0 516 790 und offenbart darüber hinaus aktivierbare Druckfarben, die durch Behandlung mit einem geeigneten Lösungsmittel aktiviert, d. h. ausgewaschen, werden.

Es ist erstrebenswert, möglichst konturenscharfe Zeichen zu erhalten, d. h. die Ränder der Zeichen sollen sehr glatt und klar begrenzt sein. Das ist insbesondere deshalb sehr wichtig, da in den Sicherheitsfolien oft sehr kleine Zeichen ausgebildet werden müssen, die nur dann deutlich erkennbar sind, wenn ihre Konturen klar ausgeprägt sind. Die bisher bekannten Verfahren liefern jedoch nur dann ein gutes Ergebnis, wenn die über der Druckfarbe liegende Beschichtung bzw. die Schichtstrukturen nicht zu dick ist (sind). Bei Druckfarben, die nicht durch Wärme aktiviert werden, ist es außerdem sehr wichtig, dass die Beschichtung von Lösungsmitteln, z.B. von Wasser, gut durchdrungen werden kann. Dies ist nur bei sehr dünnen Beschichtungen möglich. Bei größeren Schichtdicken, beispielsweise bei blickdichten Metallschichten, ist das Waschergebnis sehr schlecht. Auch Mehrfachschichten waren bisher sehr schwer entfernbar. Beispielsweise werden häufig Edelmetallschichten durch eine Schicht aus unedlem Metall mit einem Aufdruck in der gewünschten Farbe vorgetäuscht. Beim Aufdrucken ist es jedoch kaum möglich, eine völlig deckungsgleiche Ausbildung der Negativschrift in allen Schichten zu erreichen, während bei vollflächiger Aufbringung der jeweiligen Schichten und gleichzeitiger Entfernung aller Schichten in bestimmten Bereichen das Waschergebnis schlecht ist.

Aufgabe der vorliegenden Erfindung ist es daher, ein Verfahren zur Herstellung von Sicherheitsfolien mit Negativschrift bereitzustellen, das es erlaubt, auch in vergleichsweise dicken Beschichtungen oder Schichtstrukturen eine Negativschrift klar und sauber auszubilden.

Aufgabe der vorliegenden Erfindung ist es darüber hinaus, ein Verfahren zur Herstellung von Sicherheitsfolien mit Negativschrift bereitzustellen, das es erlaubt, in Beschichtungen oder Schichtstrukturen, die schwer von Lösungsmitteln durchdringbar sind, eine Negativschrift klar und sauber auszubilden.

Aufgabe der vorliegenden Erfindung ist es auch, ein Verfahren zur Herstellung von Sicherheitsfolien mit Negativschrift bereitzustellen, das es erlaubt, in Beschichtungen, die aus mehreren Einzelschichten aufgebaut sind, eine Negativschrift passergenau , d. h. deckungsgleich in allen Schichten, auszubilden.

Weitere Aufgaben der Erfindung bestehen darin, eine Sicherheitsfolie mit deutlich ausgebildeter Negativschrift, die Verwendung der Sicherheitsfolie zur Produktsicherung, ein Wertdokument mit der Sicherheitsfolie sowie ein Verfahren zur Herstellung des Wertdokuments bereitzustellen.

Die Aufgaben werden gelöst durch das Verfahren zur Herstellung einer Sicherheitsfolie mit den in Anspruch 1 angegebenen Merkmalen, durch die Sicherheitsfolie mit den in Anspruch 11 angegebenen Merkmalen, durch die Verwendung nach Anspruch 15, durch das Wertdokument nach Anspruch 16 und durch das Verfahren nach Anspruch 17.

Erfindungsgemäße Ausführungsformen sind in den jeweiligen abhängigen Ansprüchen angegeben.

Der Erfindung liegt die Erkenntnis zugrunde, dass selbst in dicken und/ oder in von Lösungsmitteln schwer durchdringbaren Beschichtungen gute, d. h. insbesondere konturenscharfe Negativschriften erhalten werden können, wenn die Beschichtungen mithilfe der Druckfarbe selektiv in den Bereichen der Negativschrift zerstört werden. Der Erfindung liegt die weitere Erkenntnis zugrunde, dass die selektive Zerstörung der Beschichtung durch die Verwendung einer Druckfarbe erreicht werden kann, in der bei Kontakt mit der Waschflüssigkeit ein Prozess stattfindet, der dazu führt, dass seitens der Druckfarbe auf die Beschichtung eine Kraft ausgeübt wird, der die Beschichtung nicht standhalten kann, so dass sie aufbricht. Nach dem Aufbrechen der Beschichtung durch die Druckfarbe ist diese für die Waschflüssigkeit, die ein Lösungsmittel für die Druckfarbe ist oder enthält, leicht zugänglich und kann rasch ausgewaschen werden, wobei zusammen mit der Druckfarbe auch die darüberliegende Beschichtung bzw. alle über der Druckfarbe liegenden Beschichtungen entfernt wird (werden). Zur Auslösung des Prozesses ist nur eine minimale Durchlässigkeit der Beschichtung für die Waschflüssigkeit erforderlich. Im Falle mehrerer Beschichtungen ergibt sich durch die gleichzeitige Entfernung aller Beschichtungen der zusätzliche Vorteil, dass die Entfernung mit sehr hoher Passergenauigkeit erfolgt. Irgendwelche Abweichungen in der Positionierung der Negativschrift, wie sie beispielsweise bei einem Aufdrucken mehrerer Beschichtungen (jeweils mit Negativschrift) übereinander vorkommen, treten nicht auf. Die Negativschrift wird in allen Schichten deckungsgleich ausgebildet.

Alternativ kann die selektive Zerstörung der Beschichtung durch die Verwendung einer Druckfarbe erreicht werden, in der durch Temperaturerhöhung und/ oder Bestrahlung ein Prozess stattfindet, der dazu führt, dass seitens der Druckfarbe auf die Beschichtung eine Kraft ausgeübt wird, der die Beschichtung nicht standhalten kann, so dass sie aufbricht. Die aufgebrochene Beschichtung ist dann für das Auswaschen der Druckfarbe durch die Waschflüssigkeit leicht zugänglich. Bei dieser Variante der vorliegenden Erfindung ist überhaupt keine Durchlässigkeit der intakten Beschichtung für die Waschflüssigkeit erforderlich.

Auch beliebige Kombinationen der Varianten Aufbrechen der Beschichtung durch Kontakt mit der Waschflüssigkeit, Aufbrechen der Beschichtung durch Bestrahlung und Aufbrechen der Beschichtung durch Erwärmung sind möglich.

Wegen des Vorgangs des "Auswaschens" der Druckfarbe wird die Druckfarbe auch als "Waschfarbe" bezeichnet.

Der Prozess in der Druckfarbe, der zur Ausübung der zerstörerischen Kraft auf die Beschichtung und zu einem Aufbrechen der Beschichtung führt, wird erfindungsgemäß folgendermaßen erzielt:
Gemäß einer Ausführungsform wird in der Druckfarbe, wenn diese mit der Waschflüssigkeit in Kontakt kommt, ein Gas erzeugt. Bereits winzige Mengen an Gas führen zu einer starken Druckerhöhung unter der Beschichtung und daher zur Ausübung einer starken Kraft auf die Beschichtung, so dass die über der Druckfarbe liegende Beschichtung aufgerissen wird.

Zur Erzeugung des Gases wird ein Zweikomponenten-Gasentwicklungssystem (im Folgenden "Gasentwicklungssystem" genannt) eingesetzt. Das Gasentwicklungssystem besteht aus einer ersten Komponente und einer zweiten Komponente, die miteinander unter Erzeugung einer oder mehrerer gasförmiger Verbindungen reagieren können. Die Bezeichnung "erste Komponente" wird bei der vorliegenden Erfindung benutzt im Sinne von "eine der beiden Komponenten" des Zweikomponenten-Gasentwicklungssystems, und die Bezeichnung "zweite Komponente" wird benutzt im Sinne von "die andere Komponente" des Zweikomponenten-Gasentwicklungssystems.

Außerdem enthält die Druckfarbe einen Füllstoff bzw. ein Pigment, ein in der verwendeten Waschflüssigkeit lösliches Bindemittel und gegebenenfalls weitere druckfarbenübliche Bestandteile, wobei der Füllstoff auch gleichzeitig eine Komponente des Gasentwicklungssystems sein kann.

"Ein" bzw. "eine" ist im Zusammenhang mit der vorliegenden Erfindung stets als "mindestens ein" bzw. "mindestens eine" zu verstehen.

Gasentwicklungssysteme im Sinne der Erfindung sind beispielsweise
- Säuren in Kombination mit Verbindungen, die mit Säuren unter Gasentwicklung reagieren, wie z. B. Carbonate und Hydrogencarbonate;
- Lösungsmittel in Kombination mit Verbindungen, die mit dem Lösungsmittel unter Gasentwicklung reagieren, wie z. B. Carbide oder Hydride in Kombination mit Wasser;
- Enzyme in Kombination mit Substraten, die sie unter Gasentwicklung abbauen können, wie z. B. Katalase in Verbindung mit Peroxiden;
- Verbindungen, die bei Bestrahlung eine Säure erzeugen, in Kombination mit Verbindungen, die mit dieser Säure unter Gasentwicklung reagieren, wie z. B. Fotosäureerzeuger in Kombination mit Basen;
- Kombinationen dieser Gasentwicklungssysteme.

Bevorzugte Komponenten des Gasentwicklungssystems sind Carbonate und Hydrogencarbonate einerseits und Säuren andererseits. Ein System Hydrogencarbonat/Säure beispielsweise entwickelt Kohlendioxid nach der folgenden allgemeinen Gleichung

MHCO₃ + HX → MX + CO₂ + H₂O

(Dabei steht M für ein einwertiges Metall, X für einen Säurerest)

Prinzipiell können alle Kombinationen von Komponenten, d. h. alle Gasentwicklungssysteme, verwendet werden, die miteinander unter Entwicklung einer oder mehrerer gasförmiger Verbindungen reagieren können, sofern sich entweder beide Komponenten dafür eignen, in eine Druckfarbe eingearbeitet zu werden, oder sofern eine der Komponenten in eine Druckfarbe eingearbeitet werden kann und die andere Komponente in einer lösungsmittelhaltigen Waschflüssigkeit, bevorzugt Wasser, gelöst werden kann. Beispielsweise können folgende Gase gebildet werden:
H₂, O₂, N₂, NO, NO₂, N₂O, Cl₂, HCl, HBr, H₂S, NH₃, CO, SO₂, CH₄, C₂H₄, C₂H₂.

Die folgende Tabelle gibt für jedes der oben genannten Gase jeweils ein Beispiel für eine Komponentenkombination, die zur Entwicklung des Gases geeignet ist, an.

**Gebildetes Gas Komponenten in der Druckfarbe bzw. Waschflüssigkeit**

| | | |
|---|---|---|
| H₂ | Salzsäure 10 % | Zink |
| O₂ | Wasserstoffperoxidlösung (10 %) | Mangan(IV)oxid |
| N₂ | Natriumnitrit | Ammoniumchlorid |
| Cl₂ | Salzsäure konzentriert (konz.) | Kaliumpermanganat |
| HCl | Schwefelsäure konz. (erwärmen) | Natriumchlorid |
| HBr | Phosphorsäure konz. (erwärmen) | Kaliumbromid |
| H₂S | Salzsäure 10 % | Eisen(II)-sulfid |
| NH₃ | Natronlauge konz. | Ammoniumchlorid |
| CO₂ | Salzsäure 10 % | Calciumcarbonat |
| CO | Schwefelsäure konz. | Natriumformiat |
| SO₂ | Schwefelsäure 20 % | Natriumsulfit |
| CH₄ | (warmes) Wasser | Aluminiumcarbid |
| C₂H₄ | Wasser | Calciumcarbid |
| C₂H₂ | Wasser | Calciumcarbid |

Es versteht sich, dass zur Entwicklung dieser Gase auch andere Komponenten und Konzentrationen geeignet sind.

Bei brennbaren, ätzenden und/oder giftigen Komponenten oder Gasen sind die im Umgang mit diesen Verbindungen erforderlichen Vorkehrungen zu beachten.

Gemäß einer erfindungsgemäßen Ausführungsform des Gasentwicklungssystems sind beide Komponenten des Gasentwicklungssystems in der Druckfarbe enthalten. In diesem Fall müssen beide Komponenten Feststoffe sein, und die Druckfarbe muss frei von Lösungsmitteln sein, die einen Kontakt zwischen der ersten und der zweiten Komponente vermitteln könnten. In erster Linie kommt dafür Wasser in Betracht, d. h., die Druckfarbe muss wasserfrei sein. Verwendete Druckfarbenbestandteile und Komponenten sind deshalb vorab zu trocknen. Alternativ kann auch ein Trockenmittel in die Druckfarbe integriert werden. Wasser in der Druckfarbe würde den Kontakt zwischen der ersten Komponente und der zweiten Komponente vermitteln und zur unerwünschten vorzeitigen Reaktion führen.

Alternativ befindet sich die erste Komponente in der Druckfarbe und die zweite Komponente in der Waschflüssigkeit. In diesem Fall braucht nur die erste Komponente ein Feststoff zu sein. Die zweite Komponente kann entweder ein Feststoff, der in der verwendeten Waschflüssigkeit löslich ist, oder eine Flüssigkeit, die mit der verwendeten Waschflüssigkeit mischbar ist, oder ein Gas, das in der verwendeten Waschflüssigkeit löslich ist, sein. Die Druckfarbe muss dann nicht notwendigerweise wasserfrei, bzw. frei von Bestandteilen, die die erste Komponente anlösen können, sein.

Bei der ersten Komponente sowie auch bei der zweiten Komponente kann es sich jeweils um nur eine einzige Verbindung oder auch um ein Gemisch von Verbindungen handeln. Beispielsweise kann die erste Komponente als Reaktionsmittel nur ein Hydrogencarbonat oder ein Gemisch von Hydrogencarbonaten, oder ein Hydrogencarbonat und ein oder mehrere Carbonate etc. enthalten, und die zweite Komponente kann beispielsweise eine organische Säure oder ein Gemisch aus mehreren organischen Säuren enthalten.

Es ist auch möglich, verschiedene Reaktionsmittel-Kombinationen zu einem Gasentwicklungssystem zusammenzustellen, sofern sich diese nicht gegenseitig stören. Beispielsweise könnte die erste Komponente aus den Reaktionsmitteln Zink und Calciumcarbonat bestehen, während die zweite Komponente Salzsäure ist, d. h. als Waschflüssigkeit verdünnte Salzsäure verwendet wird. Dabei entsteht ein Gemisch von Wasserstoff und Kohlendioxid.

Wie erwähnt, sind Carbonate und Hydrogencarbonate als eine der Komponenten des Gasentwicklungssystems bevorzugt. Zwar sind grundsätzlich alle Verbindungen geeignet, die durch Reaktion mit Säure Kohlendioxid freisetzen, aber Verbindungen aus der Gruppe der Alkalihydrogencarbonate sind bevorzugt, wobei Natriumhydrogencarbonat und Kaliumhydrogencarbonat besonders bevorzugt sind. Auch Ammoniumhydrogencarbonat kann vorteilhaft verwendet werden.

Der Anteil der Gasentwicklungs-Komponente an der Druckfarbe sollte im Bereich von 0,1 Gew.-% bis 25 Gew.-%, bevorzugt von 10 Gew.-% bis 20 Gew.-%, liegen. Besonders bevorzugt beträgt der Anteil etwa 15 Gew.-%.

Die oben genannten Verbindungen sind insbesondere wegen ihrer leichten und preiswerten Verfügbarkeit besonders geeignet. Es können jedoch auch "exotische" Verbindungen, beispielsweise Guanidincarbonat, eingesetzt werden.

Als Säuren sind grundsätzlich alle organischen und anorganischen Säuren geeignet. Wenn sich die Säure in der Druckfarbe befindet, ist es bevorzugt, dass sie bei Raumtemperatur fest ist. Sie sollte in der Waschflüssigkeit löslich sein. Die Säuren können als Einzelsubstanzen oder Gemische verwendet werden. Insbesondere für den Einsatz in einer Dispersionsfarbe sind jedoch solche Säuren zu bevorzugen, die sich analog dem Füllstoff bzw. dem Pigment in die Farbe einarbeiten lassen. Außerdem sind die Faktoren Verfügbarkeit, gleich bleibende Qualität und Kosten zu berücksichtigen. Dies führt dazu, dass unter den organischen Säuren gängige Säuren, wie Weinsäure oder Zitronensäure, bevorzugt sind. Natürlich können auch andere Säuren, wie beispielsweise Malonsäure oder Ethylendiamintetraessigsäure, verwendet werden.

Wenn sich die erste Komponente und die zweite Komponente beide in der Druckfarbe befinden, ist es bevorzugt, dass die erste Komponente und die zweite Komponente in stöchiometrischen Mengen bezogen auf die reaktiven Gruppen eingesetzt werden, um die oben beschriebene Reaktion optimal durchführen zu können.

Wenn sich nur die erste Komponente in der Druckfarbe befindet, während die zweite Komponente in der Waschflüssigkeit gelöst ist, spielt Stöchiometrie keine Rolle. Vielmehr ist auf eine ausreichende Konzentration der zweiten Komponente in der Waschflüssigkeit zu achten, d. h. die zweite Komponente sollte im Überschuss vorhanden sein. Wenn sich die Säure in der Waschflüssigkeit befindet, sind als Säure alle flüssigen und alle löslichen organischen und anorganischen Säuren und miteinander verträgliche Gemische davon einsetzbar. Besonders bevorzugte Beispiele sind die vorstehend genannten gängigen organischen Säuren Weinsäure, Zitronensäure, Essigsäure und Ameisensäure, und die anorganischen Säuren Salzsäure, Phosphorsäure und Schwefelsäure. Die Konzentration der Säure ist entsprechend der verwendeten ersten Komponente anzupassen, sollte jedoch mehr als 0,1 % betragen. Bei der Wahl der Art und der Konzentration der Säure muss auch darauf geachtet werden, dass den Beschichtungen kein Korrosionsschaden zugefügt wird.

Alternativ ist es auch möglich, die Säurekomponente als erste Komponente in der Druckfarbe vorzusehen, während die Carbonat/Hydrogencarbonat-Komponente in der Waschflüssigkeit gelöst vorliegt.

Die am meisten bevorzugten Gasentwicklungssysteme enthalten als erste Komponente Natrium- und/oder Kaliumhydrogencarbonat und als zweite Komponente eine organische Säure, wie Weinsäure und/oder Zitronensäure, wobei beide Komponenten in stöchiometrischen Mengen bezogen auf die reaktiven Gruppen in der Druckfarbe enthalten sind.

Im Hinblick darauf, dass das erfindungsgemäße Verfahren zur Erzeugung einer Negativschrift insbesondere in sehr dicken Beschichtungen oder Schichtstrukturen aus mehreren Schichten gedacht ist, ist es sehr vorteilhaft, dass bei der Reaktion zwischen Hydrogencarbonat/ Carbonat und einer Säure Wasser frei wird. Die dicken Beschichtungen lassen nur wenig Wasser durchdringen, und das bei der Reaktion frei werdende Wasser hilft zusätzlich, die Komponenten in der Druckfarbe anzulösen und die Reaktion zu beschleunigen.

Gasentwicklungssysteme mit einer Säurekomponente können diese Säuren auch in Form einer Vorläuferverbindung enthalten. Geeignete Vorläuferverbindungen sind beispielsweise kationische Fotoinitiatoren, die bei Belichtung mit einer auf dem jeweiligen Fotoinitiator abgestimmten Wellenlänge Lewis- oder Brönsted-Säuren freisetzen. Beispielhafte Fotosäureerzeuger sind Sulfonium-, Iodonium- und Diazonium-Salze. Sie sind bevorzugt in der Druckfarbe enthalten.

Gemäß einer Variante der erfindungsgemäßen Gasentwicklungssysteme stellt die Waschflüssigkeit selbst, bzw. ein in der Waschflüssigkeit enthaltenes Lösungsmittel, eine Komponente des Gasentwicklungssystems dar. Beispiele hierfür sind Verbindungen wie Hydride und Carbide als erste Komponente und Wasser als Waschflüssigkeit bzw. zweite Komponente. Bei der Reaktion bilden die Hydride Wasserstoff, die Carbide verschiedene niedrige Kohlenwasserstoffe, je nach Art des Carbids.

Auch biochemische Reaktionen können erfindungsgemäß zur Gasentwicklung genutzt werden. Als Beispiel hierfür sei Katalase genannt, die Wasserstoffperoxid und andere Peroxide unter Sauerstoffentwicklung zersetzt. Hier kann beispielsweise die Katalase in der Druckfarbe und Wasserstoffperoxid in der Waschflüssigkeit enthalten sein, oder es kann ein Peroxid in der Druckfarbe und das Enzym in der Waschflüssigkeit enthalten sein.

Gemäß einer anderen Ausführungsform der vorliegenden Erfindung enthält die Druckfarbe als Bestandteil, der bei Kontakt mit der Waschflüssigkeit einen Prozess bewirkt, der zu einem Aufbrechen der über der Druckfarbe liegenden Bereiche der Beschichtung führt, ein Quellmittel.

Bereits kleine Mengen an durch die Beschichtung dringender Waschflüssigkeit lassen die Druckfarbe unter der Beschichtung so stark aufquellen, dass sie auf die darüberliegende Beschichtung eine Kraft ausübt, die zu einer Beschädigung der Beschichtung führt. Die beschädigte Beschichtung lässt die Waschflüssigkeit leicht und schnell eindringen, so dass das Aufquellen der Druckfarbe rasant beschleunigt wird und die Beschichtung durch die dadurch auf sie ausgeübten Kräfte zerstört wird. Bevorzugte Quellmittel sind Verbindungen, die die Porosität der Druckfarbe erhöhen und ein großes Absorptionsvermögen für Wasser haben, beispielsweise Stärke, CelluloseDerivate, Alginate, Dextrane und Polyvinylpolypyrrolidon (PVPP). Besonders geeignet sind sogenannte Superabsorber, wie sie im Hygienebereich eingesetzt werden, die Polyacrylate enthalten, große Mengen Flüssigkeiten aufnehmen können und dadurch ihr Volumen drastisch vergrößern können. Die Quellmittel werden einzeln oder als Gemische mehrerer Quellmittel verwendet.

Zur besseren Benetzung der Druckfarben-Bestandteile mit Waschflüssigkeit, beispielsweise Wasser, und daher zur Beschleunigung der Reaktion, kann die Druckfarbe zusätzlich Hydrophilierungsmittel enthalten, wie z. B. Polyethylenglycolsorbitanfettsäureester. Eine schnelle und gute Benetzung und damit ein schneller Kontakt zwischen den reaktiven Bestandteilen der Druckfarbe und der Waschflüssigkeit ist bei einer Erzeugung von Negativschriften in dicken und schwer waschflüssigkeitsdurchlässigen Beschichtungen von großem Vorteil, da dann die wenige vorhandene Waschflüssigkeit effizienter genutzt werden kann.

Alle bisher genannten Systeme erfordern eine gewisse, wenn auch geringe Durchlässigkeit der Beschichtung für die Waschflüssigkeit, um den Prozess einzuleiten, der zum selektiven Aufbrechen der Beschichtung führt. Es gibt jedoch auch "dichte" Beschichtungen, d. h. Beschichtungen, die überhaupt keine Durchlässigkeit für Waschflüssigkeiten besitzen, jedenfalls nicht innerhalb akzeptabler Zeitspannen. In diesem Fall muss der erste Schritt der erfindungsgemäßen Ausbildung der Negativschrift, die selektive Zerstörung der Beschichtung in den über der Druckfarbe liegenden Bereichen, ohne Mitwirkung der Waschflüssigkeit erfolgen. Dazu wird erfindungsgemäß eine Druckfarbe verwendet, die einen Bestandteil enthält, der bei Bestrahlung oder durch die aus der Bestrahlung resultierende Prozesswärme oder durch sonstiges Erwärmen einer Reaktion unterliegt, die zu einem Aufbrechen der Beschichtung führt. Geeignete Bestandteile sind Verbindungen, die bei Bestrahlung und/ oder Erwärmung ein Gas abspalten, d. h. Blähmittel. Bereits sehr kleine Gasmengen führen zu einer starken Druckerhöhung unter der Beschichtung und in der Folge zur Rissbildung in der Beschichtung in den über der Druckfarbe liegenden Bereichen. Sobald die Beschichtung aufgerissen ist, ist die Druckfarbe für die Waschflüssigkeit leicht zugänglich und kann wie vorstehend beschrieben ausgewaschen werden, wobei zusammen mit der Druckfarbe auch die darüberliegende Beschichtung oder die darüberliegenden Beschichtungen entfernt wird (werden).

Ein Beispiel für ein Blähmittel, das bei Bestrahlung und/ oder Erwärmung ein Gas abspaltet, ist Azoisobuttersäurenitril, das bei UV-Bestrahlung Stickstoff abspaltet.

Selbstverständlich können Blähmittel auch bei für Waschflüssigkeiten durchlässigen Beschichtungen verwendet werden.

Auch Kombinationen der genannten Ausführungsformen können vorteilhaft eingesetzt werden, beispielsweise Kombinationen von Gasentwicklungssystemen und Quellmitteln, von Gasentwicklungssystemen und Blähmitteln, von Quellmitteln und Blähmitteln sowie von allen drei Varianten in Kombination.

Wird beispielsweise ein Blähmittel in Kombination mit einem Gasentwicklungssystem eingesetzt, kann eine Beschichtung, die keine Waschflüssigkeit durchlässt, durch Bestrahlen oder Erwärmen aufgebrochen werden und anschließend, nachdem die Waschflüssigkeit Zutritt zu der Druckfarbe erhalten hat, kann die Reaktion des Gasentwicklungssystems beginnen. Unterstützt durch die Gasentwicklung wird die Druckfarbe schneller ausgewaschen und die über der Druckfarbe liegende Beschichtung effizienter entfernt.

Die erfindungsgemäß verwendeten Gasentwicklungssysteme und Quellmittel sind teilweise als "Tablettensprengmittel" bekannt. Tablettensprengmittel werden sowohl im pharmazeutischen Bereich verwendet, um für einen raschen Zerfall von Tabletten und damit eine rasche Verfügbarkeit der Wirkstoffe zu sorgen, als auch in anderen Bereichen, in denen ein rascher Zerfall von Presskörpern erstrebenswert erscheint. Beispielsweise sind aus der WO 03/084836 A1 wasserlösliche Behälter bekannt, die Presskörper, wie Tabletten oder Granulate, enthalten. Die Presskörper können Tablettensprengmittel enthalten, beispielsweise Gas freisetzende Systeme aus organischen Säuren und Carbonaten/Hydrogencarbonaten. Die wasserlöslichen Behälter haben Löcher, durch die Wasser ins Innere des Behälters eindringen kann und die Presskörper "sprengt". Der Behälter enthält dann eine lockere Füllung kleiner Partikel, die nach der Auflösung des Behälters schnell für ihren beabsichtigten Zweck, beispielsweise als waschaktive Substanzen, zur Verfügung stehen.

Im Unterschied zum Stand der Technik werden bei der vorliegenden Erfindung die Gasentwicklungssysteme und Quellmittel nicht zum Sprengen eines Presskörpers eingesetzt. Vielmehr werden sie als Bestandteil einer Druckfarbe verwendet und mit ihrer Hilfe ein anderer Körper, der selbst keinerlei "Sprengmittel" enthält, nämlich die über der Druckfarbe liegende Beschichtung, aufgebrochen. Der Gedanke, mittels eines sprengmittelhaltigen Körpers einen sprengmittelfreien Körper aufzubrechen, ist per se neu. Es ist insbesondere überraschend, dass Verbindungen, wie Tablettensprengmittel, in Druckfarben dazu verwendet werden können, in Sicherheitsfolien verbesserte Negativschriften auszubilden.

Außer dem Gasentwicklungssystem und/oder dem Quellmittel enthält die Druckfarbe ein lösliches Bindemittel oder ein Gemisch löslicher Bindemittel in einem gewichtsmäßigen Anteil an der Druckfarbe von im Allgemeinen 5 % bis 50 %, bevorzugt 5 % bis 15 %. "Löslich" heißt, in der zu verwendenden Waschflüssigkeit löslich. Bevorzugte Bindemittel sind beispielsweise Casein, Dextrin, gelöschter Kalk, Carboxymethylcellulose, Nitrocellulose, Stärke, Polyvinylalkohol (PVA), Gummi-Arabicum und künstliche Nachstellungen dieser Substanzen (z. B. Ambergum ® 1221 von Hercules). Als Bindemittel ist ferner denkbar Hydroxyalkylcellulose, wobei der Alkylrest durch die homologe Reihe -methyl, -ethyl, -propyl etc. gebildet wird. Bevorzugt wäre dabei Hydroxypropylcellulose oder Hydroxymethylcellulose.

Ferner ist in der Druckfarbe ein Füllstoff bzw. ein Pigment in einem gewichtsmäßigen Anteil an der Druckfarbe von im Allgemeinen 5 % bis 80 %, bevorzugt 15 % bis 30 %, enthalten. Bevorzugte Füllstoffe sind anorganische Füllstoffe aus den Gruppen Kreide, Bentonit, Aerosil, Zeolith, Silikat, beispielsweise Titandioxid, Kaolin, Bariumsulfat, Kieselgel, Aluminiumoxid und Zirkondioxid. Darüber hinaus kann der Füllstoff eine Verbindung sein, die gleichzeitig eine Komponente eines Gasentwicklungssystems oder ein Quellmittel oder ein Blähmittel ist, d. h. die selbst reaktiv ist, beispielsweise ein Carbonat. Die inerten und die reaktiven Füllstoffe können alleine oder im Gemisch miteinander eingesetzt werden.

Als weiterer Bestandteil wird bevorzugt ein Lösungsmittel oder ein Gemisch von Lösungsmitteln vorgesehen. Das Lösungsmittel ist in einem gewichtsmäßigen Anteil an der Druckfarbe von im Allgemeinen 10 % bis 90 %, bevorzugt 50 % bis 80 %, enthalten. Bevorzugte Lösungsmittel sind Lösungsmittel aus der Gruppe der Alkohole, insbesondere Ethanol und Isopropanol. Häufig ist es auch ausreichend, wenn die Druckfarbe nur Bindemittel ohne Lösungsmittel enthält.

Darüber hinaus können in der Druckfarbe weitere Bestandteile enthalten sein, wie die bereits erwähnten Hydrophilierungsmittel, Trockenmittel und sonstige gängige Druckfarben-Zusätze, die dem Fachmann bekannt sind.

Im Folgenden werden einige beispielhafte Druckfarben-Rezepturen angegeben:

### Beispiel a)

Rezepturen mit einem Gasentwicklungssystem, wobei sich die erste und die zweite Komponente in der Druckfarbe befinden und als Waschflüssigkeit Wasser verwendet wird (Rezeptur 4 enthält Bariumsulfat und Magnesiumsulfat als Trockenmittel):

| 1. | |
|---|---|
| Zitronensäure | 9,0 Gew.-% |
| Natriumhydrogencarbonat | 11,0 Gew.-% |
| Hydroxymethylcellulose | 7,5 Gew.-% |
| Titandioxid | 12,5 Gew.-% |
| Ethanol | 60,0 Gew.-% |
| | |

| 2. | |
|---|---|
| Malonsäure | 6,0 Gew.-% |
| Natriumcarbonat | 9,0 Gew.-% |
| Hydroxymethylcellulose | 9,5 Gew.-% |
| Titandioxid | 20,5 Gew.-% |
| Ethanol | 55,0 Gew.-% |
| | |

| 3. | |
|---|---|
| Ethylendiamintetraessigsäure | 5,0 Gew.-% |
| Guanidincarbonat | 10,0 Gew.-% |
| Hydroxymethylcellulose | 10,0 Gew.-% |
| Aluminiumoxid | 15,0 Gew.-% |
| Isopropanol | 60,0 Gew.-% |
| | |

| 4. | |
|---|---|
| Zitronensäure | 9,0 Gew.-% |
| Natriumhydrogencarbonat | 11,0 Gew.-% |
| Carboxmethycellulose | 7,5 Gew.-% |
| Bariumsulfat | 10,0 Gew.-% |
| Magnesiumsulfat | 2,5 Gew.-% |
| Ethanol | 60,0 Gew.-% |

### Beispiel b)

Rezepturen mit Gasentwicklungssystem, wobei sich eine Carbonat-Komponente in der Druckfarbe befindet (In Rezeptur 3 wirkt die reaktive Komponente Calciumcarbonat gleichzeitig als Füllstoff):

| 1. | |
|---|---|
| Natriumhydrogencarbonat | 5,0 Gew.-% |
| Hydroxymethylcellulose | 10,0 Gew.-% |
| Titandioxid | 15,0 Gew.-% |
| Ethanol | 70,0 Gew.-% |
| | |

| 2. | |
|---|---|
| Ammoniumhydrogencarbonat | 15,0 Gew.-% |
| Hydroxymethylcellulose | 10,0 Gew.-% |
| Zirkondioxid | 15,0 Gew.-% |
| Ethanol | 60,0 Gew.-% |
| | |

| 3. | |
|---|---|
| Calciumcarbonat | 25,0 Gew.-% |
| Hydroxymethylcellulose | 10,0 Gew.-% |
| Ethanol | 65,0 Gew.-% |

Als Waschflüssigkeit wird in diesem Fall beispielsweise eine wässerige 10 %ige Zitronensäurelösung, oder eine wässerige 5 %ige Ameisensäure, oder eine wässerige 20 %ige Phosphorsäure verwendet.

### Beispiel c)

Rezeptur mit Gasentwicklungssystem, wobei sich eine Säure-Komponente in der Druckfarbe befindet:

| | |
|---|---|
| Weinsäure | 10,0 Gew.-% |
| Hydroxymethylcellulose | 10,0 Gew.-% |
| Titandioxid | 15,0 Gew.-% |
| Ethanol | 65,0 Gew.-% |

Als Waschflüssigkeit wird in diesem Fall beispielsweise eine 15 %ige Natriumhydrogencarbonatlösung verwendet.

### Beispiel d)

Rezeptur mit Quellmittel in der Druckfarbe, wobei als Waschflüssigkeit Wasser verwendet wird:

| | |
|---|---|
| PVPP | 20,0 Gew.-% |
| Hydroxymethylcellulose | 7,5 Gew.-% |
| Titandioxid | 12,5 Gew.-% |
| Ethanol | 60,0 Gew.-% |

Als Substrat für die erfindungsgemäße Sicherheitsfolie wird eine Trägerfolie verwendet, bevorzugt eine möglichst transparente, d. h. lichtdurchlässige, Trägerfolie. Bevorzugte Materialien sind Polypropylen, Polyethylen, Polystyrol, Polyester, insbesondere Polycarbonat, Polyethylenterephthalat, Coextrudate sowie Kombinationen davon, und geprägte UV-Lacke, bzw. auf die Trägerfolie aufgedruckte Lacke. Auch andere Folien können verwendet werden, wobei sie bevorzugt transparent sind, eine ausreichende Festigkeit haben, sich bedrucken lassen und mit einer Abdeckschicht, insbesondere mit Metall, beschichtet werden können. Die Folien können mit einer Effektschicht, wie z. B. einem Druckmuster, einer doppelbrechenden Struktur, einer beugungsoptisch wirksamen Schicht, Hologrammen, Flüssigkristall- oder Flüssigkristallpigmentschichten, Interferenzschichten etc., ausgestattet sein. Vor allem die eingesetzten Flüssigkristallschichtsysteme und Interferenzschichtsysteme zeigen im Allgemeinen einen sogenannten Farbkippeffekt.

Die Folie wird üblicherweise in Form endloser Bänder verwendet, da das Verfahren vorzugsweise kontinuierlich durchgeführt wird. Die Folien werden nach ihrer Fertigstellung auf das gewünschte Maß der Sicherheitselemente zugeschnitten. "Sicherheitsfolien" im Sinne der vorliegenden Erfindung bezeichnen sowohl die Folienbahnen als auch die als Sicherheitselement zugeschnittenen Folien.

Die Folie wird mit der erfindungsgemäßen Druckfarbe mit Zeichen in Form der auszubildenden Negativschrift bedruckt. Hierfür sind alle gängigen Druckverfahren, wie Tiefdruck, Hochdruck, Flexodruck, Offsetdruck, Siebdruck, Digitaldruck etc., verwendbar, wobei insbesondere das Tiefdrucken bevorzugt ist. Beim Tiefdrucken können besonders klare Kantenkonturen und ein entsprechend hoher Farbauftrag erreicht werden. Alternativ kann das Auftragen der Druckfarbe auch durch Sprühapplikation erfolgen.

Nach dem Trocknen der aufgetragenen Druckfarbe wird eine geeignete, bevorzugt opake Abdeckschicht aufgebracht, wobei die Aufbringung vollflächig oder teilweise durchgeführt werden kann. Bei der Abdeckschicht handelt es sich bevorzugt um eine metallische Beschichtung, oder eine Metall enthaltende Beschichtung, wobei alle verdampfbaren oder sublimierbaren Metalle, Metall-Legierungen, Metalloxide und Gemische davon eingesetzt werden können, bevorzugt Silber, Gold, Chrom, Aluminium, Nickel, Eisen, Kobalt, Kupfer und Gemische davon, insbesondere Aluminium. Die metallische Beschichtung wird beispielsweise aufgedampft oder aufgesputtert.

Mit besonderem Vorteil wird das erfindungsgemäße Verfahren bei Abdeckschichten eingesetzt, die nicht nur aus einer Schicht, sondern aus einer Schichtfolge mehrerer Schichten bestehen und deshalb dick und schwer für Waschflüssigkeit durchlässig sind. Derartige Schichtstrukturen bestehen beispielsweise aus einer auf die Trägerfolie aufgedampften Metallschicht, einer darauf aufgedruckten Funktionsfarbe, einer magnetischen Druckfarbe und einer weiteren aufgedampften Metallisierung oder einer Metalleffektschicht, d. h., einer Schicht aus Metallimitationsfarbe. Derartige Schichtstrukturen aus mehreren Schichten werden verwendet, um eine Sicherheitsfolie mit mehreren unterschiedlichen Sicherheitsmerkmalen zu erhalten, beispielsweise eine Sicherheitsfolie mit Negativschrift und magnetischem Sicherheitsmerkmal (magnetische Druckfarbe). Da die magnetische Druckfarbe dunkel ist, muss sie mit einer weiteren Metallschicht oder Metallimitationsschicht abgedeckt werden, da das Sicherheitselement sonst nicht von beiden Seiten her dasselbe Erscheinungsbild bieten würde. Eine Abdeckung der Magnetschicht kann z. B. durch eine teildurchlässige Schicht gemäß der EP 0 998 396 B1 erfolgen. Insoweit wird der Offenbarungsgehalt der EP 0 998 396 B1 in die vorliegende Anmeldung aufgenommen. Weiterhin können die Abdeckschichten beispielsweise Schichtstrukturen aufweisen, die aus zwei oder mehr aufgedampften Metallschichten mit dazwischen liegenden aufgedampften "Abstandshaltern", z. B. aus SiO₂, bestehen. Letztgenannte Mehrschichtstrukturen, aber auch dreischichtige Strukturen, umfassend eine Reflektor-, eine Absorber- und eine Dielektrikumsschicht in den dem Fachmann bekannten Anordnungen, werden mit Vorteil als Interferenzschichtsysteme eingesetzt.

Ein besonderer Vorteil der vorliegenden Erfindung ist, dass in Sicherheitsfolien mit einem Mehrschichtaufbau die Negativschrift in den mehreren Schichten passergenau ausgebildet werden kann. Eine bevorzugte Ausführungsvariante sind Sicherheitsfolien mit Metallisierungen, bei denen die Metallisierung in der Optik eines besonders teueren oder eines nicht ohne weiteres zugänglichen Metalls oder eines Metalls, dessen Verwendung aus anderen Gründen nicht bevorzugt ist, beispielsweise wegen technischer Schwierigkeiten bei der Aufbringung, ausgeführt wird. Beispielsweise können erfindungsgemäß Sicherheitselemente in Gold- oder Kupferoptik bereitgestellt werden, ohne jedoch Metallisierungen mit Gold oder Kupfer durchführen zu müssen. Die Erzielung einer Edelmetalloptik durch Bedrucken eines unedlen Metalls, wie Aluminium, mit einer Buntfarbe in einem passenden Farbton ist üblich, jedoch nur vollflächig problemlos möglich. Wenn metallfreie Strukturen, wie eine Negativschrift, dargestellt werden sollen, ergibt sich das Problem, dass die Buntfarbe nicht mit der für die feinen Negativschriften in Sicherheitselementen erforderlichen Genauigkeit passergenau aufgedruckt werden kann. Erfindungsgemäß wird deshalb so vorgegangen, dass ein Trägermaterial, vorzugsweise eine Polymerfolie, wie vorstehend angegeben, mit einer Druckfarbe, die einen reaktiven Bestandteil oder ein Gemisch reaktiver Bestandteile enthält, in Gestalt der zu erzeugenden Negativschrift bedruckt wird, und anschließend vollflächig metallisiert wird, beispielsweise mit Aluminium. Die Polymerfolie kann auch mit einem Lack, beispielsweise einem prägbaren UV-Lack, beschichtet sein, in den eine optische Struktur wie eine Hologrammstruktur eingeprägt ist. Auf die metallisierte Trägerfolie bzw. auf die metallisierte Hologrammstruktur wird dann, ebenfalls vollflächig, eine Funktionsfarbe oder eine Buntfarbe aufgebracht. Dies kann mit allen gängigen Druckverfahren, wie beispielsweise Flexo- oder Tiefdruck, jedoch auch durch Beschichtungs- oder Sublimationsverfahren, die eine entsprechende Schichtdicke liefern, geschehen.

Soll eine Edelmetalloptik erzielt werden, wird eine Buntfarbe mit dem gewünschten Farbton aufgebracht. Geeignete Buntfarben sind dem Fachmann bekannt. Der Schichtaufbau wird anschließend Bedingungen ausgesetzt, die zu einem Aufbrechen der über der Druckfarbe liegenden Bereiche des Schichtaufbaus führen. Dies kann, wie vorstehend ausgeführt, beispielsweise durch Bestrahlung oder durch Erwärmung geschehen, oder durch Eindringen von Waschflüssigkeit durch den Schichtaufbau hindurch und in die Druckfarbe hinein. Im letzteren Fall muss der Schichtaufbau eine gewisse Durchlässigkeit für die Waschflüssigkeit besitzen, d. h., die verwendeten Buntfarben sollten zumindest dann, wenn sie lösliche Farbpigmente enthalten, zusätzlich poröse Füllstoffe enthalten. Im Falle von unlöslichen Farbpigmenten schaffen meist bereits die Farbpigmente selbst eine ausreichende Porosität und Waschflüssigkeits-Durchlässigkeit der Buntfarbe. Nachfolgend ist eine Rezeptur für eine geeignet angepasste Buntfarbe angegeben (bei den Angaben in Klammern handelt es sich um den Handelsnamen bzw. den Hersteller des jeweiligen Stoffes):

| | |
|---|---|
| Bindemittel (Neopac ® E125, DSM Neoresins) | 67,61 kg |
| Wachs (Aquacer ® 513, Byk Chemie) | 3,00 kg |
| Füllstoff (Syloid ® W 300, Grace) | 15,78 kg |
| Verzögerer (tert. Butoxypropanol) | 0,45 kg |
| Verlaufsadditiv (Byk Dynwet ® 800, Byk Chemie) | 1,83 kg |
| Farbpigment | 9,11 kg |
| Vernetzer /Härter (Basocoll ® OV, BASF) | 2,25 kg |
| | |
| Gesamt | 100,03 kg |

Als Farbpigment können z. B. Neozaponfarbstoffe von BASF oder Orasolfarbstoffe von Ciba eingesetzt werden.

Folgende Schichtdicken sind bevorzugt: 1 nm bis 10 µm, vorzugsweise 10 nm bis 50 nm, für die Metallisierungsschicht (z. B. Aluminium), 50 nm bis 20 µm, vorzugsweise 200 nm bis 2000 nm, für die Schicht aus Buntfarbe oder Funktionsfarbe.

Wenn der Schichtaufbau in den Bereichen über der reaktiven Druckfarbe aufgerissen ist, kann die Druckfarbe durch Waschflüssigkeit leicht ausgewaschen werden. Dabei wird der Schichtaufbau, bestehend aus metallischen und Buntfarben- bzw. Funktionsfarbenschicht(en) vollständig mit entfernt, d. h., die Negativschrift wird in allen Schichten passergenau ausgebildet, und Bereiche, in denen Schichtreste zurück bleiben, die optisch wahrnehmbar wären, sind ausgeschlossen.

Die vorstehend geschilderte Ausführungsvariante ergibt eine Sicherheitsfolie bzw. ein Sicherheitselement mit holographischem Echtheitsmerkmal in Edelmetalloptik und mit Negativschrift, wobei jedoch keine Beschichtung mit Edelmetall durchgeführt werden muss.

Alternativ kann der geschilderte Schichtaufbau auch die umgekehrte Reihenfolge aufweisen, d. h., es kann zuerst die Buntfarbe oder die Funktionsfarbe auf die Trägerfolie aufgebracht werden, beispielsweise durch Sublimation, und danach metallisiert werden.

Eine weitere bevorzugte Ausführungsvariante sind Sicherheitsfolien, die Schichten mit Flüssigkristallen oder Interferenzpigmenten zur Erzeugung eines Farbkippeffekts aufweisen, wobei in diesen Schichten eine Negativschrift ausgebildet ist. Damit der optische Effekt gut sichtbar ist, sollten die "optisch aktiven" Schichten auf einem farbigen Untergrund, bevorzugt auf einem dunklen oder schwarzen Untergrund, ausgebildet werden. Erfindungsgemäß werden derartige Schichten bevorzugt auf dunklen Buntfarben oder auf dunklen Funktionsfarben, wie Magnetfarben, aufgetragen.

Ein entsprechendes Sicherheitselement mit Negativschrift wird hergestellt, indem eine Trägerfolie, bevorzugt eine Trägerfolie mit einer Lackschicht mit Beugungsstruktur, in den Bereichen der späteren Negativschrift mit einer reaktiven Druckfarbe beschichtet wird, dann vollflächig eine Buntfarbe oder eine Funktionsfarbe (bevorzugt mit dunklem Farbton) aufgetragen wird, und darauf wiederum vollflächig eine Flüssigkristallschicht oder eine Interferenzpigmentschicht aufgetragen wird. Der Prozess des Aktivierens der Druckfarbe, des Auswaschens der Druckfarbe und der Entfernung des über der Druckfarbe liegenden Schichtaufbaus ergibt dann das gewünschte Sicherheitselement mit Farbkippeffekt und in allen Schichten passergenau ausgebildeter Negativschrift. Alternativ ist es auch denkbar, dass die optisch variable Schicht, insbesondere die Flüssigkristallschicht, erst dann vollflächig aufgetragen wird, nachdem die über der Druckfarbe liegenden Schichten (z. B. Bunt- oder Funktionsfarbe) durch Auswaschen der Druckfarbe entfernt wurden.

Allgemein kann das Verfahren zur Entfernung der Druckfarbe und der über der Druckfarbe liegenden Bereiche der Beschichtung oder der Beschichtungen folgendermaßen beschrieben werden:
Die mit der Druckfarbe bedruckte und mit einer oder mehreren Beschichtungen versehene Folie wird einem Waschvorgang unterzogen. Dabei dringt Waschflüssigkeit in geringer Menge durch die Beschichtung oder die Beschichtungen hindurch, wodurch in der Druckfarbe Gas freigesetzt wird und/oder die Druckfarbe aufquillt. Alternativ kann eine Druckfarbe mit Blähmittel verwendet werden und die Druckfarbe durch Bestrahlung und/ oder Erwärmung aufgebläht werden. Dadurch wird auf die Beschichtung ein Druck ausgeübt, der sie in den über der Druckfarbe liegenden Bereichen aufsprengt und so einen effizienten Waschflüssigkeitszutritt und ein schnelles Auswaschen ermöglicht. Zusammen mit der Druckfarbe wird dabei die darüberliegende Beschichtung oder der darüberliegende Schichtaufbau sauber entfernt. Die Wirkung der Waschflüssigkeit kann, sofern gewünscht, zusätzlich durch mechanische Mittel, wie Abreiben, Bürsten, Hochdruckdüsen oder durch Ultraschall unterstützt werden. Die Negativschrift wird in allen Schichten deckungsgleich, d. h. passergenau, ausgebildet.

Sicherheitsfolien mit Negativschrift, die in unterschiedlichen Bereichen verschiedene Materialien als oberste Schicht aufweisen oder unterschiedlich dicke Abdeckschichten aufweisen, werden erfindungsgemäß hergestellt, wenn ein Substrat partiell mit einer ersten Druckfarbe beschichtet wird, darauf eine erste Abdeckschicht aufgebracht wird, anschließend wiederum partiell mit einer zweiten Druckfarbe (die mit der ersten Druckfarbe identisch sein kann oder nicht) beschichtet wird, jedoch nicht deckungsgleich mit der ersten Druckfarbe, und dann eine zweite Abdeckschicht aufgebracht wird. Die Abdeckschichten können beispielsweise aus Metallen, wie Kupfer oder Aluminium, bestehen. Beim Auswaschen werden in den Bereichen, in denen die erste Druckfarbe aufgetragen wurde, beide Abdeckschichten entfernt, und in den Bereichen, in denen die zweite Druckfarbe aufgetragen wurde, wird nur die zweite Abdeckschicht entfernt. Wenn die erste Abdeckschicht und die zweite Abdeckschicht aus verschiedenen Materialien bestehen, wird auf diese Weise nicht nur eine Negativschrift, sondern noch ein weiteres Muster in Form der ursprünglich mit der zweiten Druckfarbe abgedeckten Bereiche ausgebildet.

Die Löslichkeit des Bindemittels kann je nach Bedarf eingestellt werden. So kann anstelle eines wasserlöslichen Bindemittels in der Druckfarbe grundsätzlich auch in organischen Lösungsmitteln lösliches Bindemittel eingesetzt werden. Dann muss als Waschflüssigkeit natürlich eine Waschflüssigkeit verwendet werden, die ein entsprechendes organisches Lösungsmittel enthält. Dadurch wird die Auswahl an einsetzbaren Gasentwicklungssystemen und Quellmitteln deutlich eingeschränkt.

Nach dem Auswaschen der Druckfarbe wird die nun eine Negativschrift aufweisende Folie getrocknet und auf die Form des gewünschten Sicherheitselements, z. B. einem Sicherheitsfaden oder einem Sicherheitsetikett, zugeschnitten. Die Folienbahn kann auch als Transferfolie ausgebildet werden, mit deren Hilfe Sicherheitselemente beliebiger Form auf Wertdokumente oder beliebige andere zu sichernde Produkte übertragen werden können. Dazu geeignete Transferverfahren sind dem Fachmann bekannt.

Die Erfindung wird nachstehend anhand der Figuren weiter erläutert. Darin zeigen:
- Fig. 1: eine Banknote mit eingelagertem Sicherheitsfaden,
- Fig. 2: eine Aufsicht auf ein Sicherheitselement,
- Fig. 3: einen Schnitt durch das Sicherheitselement von Fig. 2 entlang der Linie A-B vor der Ausbildung der Negativschrift,
- Fig. 4: einen Schnitt durch das Sicherheitselement von Fig. 2 entlang der Linie A-B während der Ausbildung der Negativschrift,
- Fig. 5: einen Schnitt durch das Sicherheitselement von Fig. 2 entlang d der Linie A-B nach der Ausbildung der Negativschrift,
- Fig. 6: einen Schnitt durch ein Sicherheitselement gemäß einer erfindungsgemäßen Ausführungsform mit Edelmetalloptik vor der Ausbildung der Negativschrift,
- Fig. 7: eine Darstellung wie in Fig. 6, aber während der Ausbildung der Negativschrift,
- Fig. 8: eine Darstellung wie in Fig. 6, aber nach Ausbildung der Negativschrift,
- Fig. 9: einen Schnitt durch ein Sicherheitselement gemäß einer weiteren erfindungsgemäßen Ausführungsform vor der Ausbildung der Negativschrift,
- Fig. 10: eine Darstellung wie in Fig. 9, aber nach der Ausbildung der Negativschrift,
- Fig. 11: einen Schnitt durch ein Sicherheitselement gemäß einer weiteren erfindungsgemäßen Ausführungsform vor der Ausbildung der Negativschrift,
- Fig. 12: eine Darstellung wie in Fig. 11, aber nach der Ausbildung der Negativschrift,
- Fig. 13: einen Schnitt durch ein Sicherheitselement gemäß einer weiteren erfindungsgemäßen Ausführungsform, mit Farbkippeffekt, vor der Ausbildung der Negativschrift,
- Fig. 14: eine Darstellung wie in Fig. 13, aber nach der Ausbildung der Negativschrift, und
- Fig. 15: einen Schnitt durch ein Sicherheitselement gemäß einer weiteren erfindungsgemäßen Ausführungsform mit beidseitig identischem Erscheinungsbild nach der Ausbildung der Negativschrift.

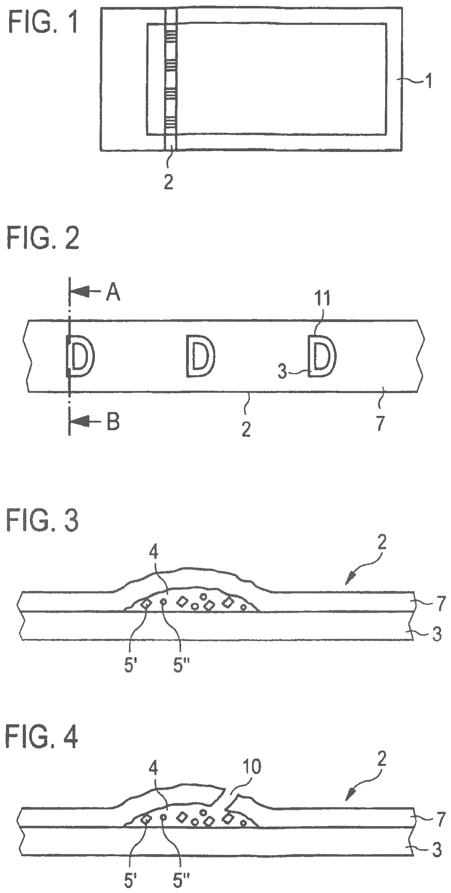

Fig. 1 zeigt eine Banknote 1 mit eingelagertem Sicherheitselement 2, das als sogenannter Fenstersicherheitsfaden ausgeführt ist. Diese Ausführungsform gewährleistet, dass das Sicherheitselement zumindest in Teilbereichen sowohl im Auf- als auch im Durchlicht gut sichtbar ist. Dafür wird der Sicherheitsfaden in die Papiermasse quasi eingewebt, so dass er in regelmäßigen Abständen direkt an die Banknotenoberfläche tritt, was durch die Schraffierungen angedeutet wird.

Fig. 2 zeigt das Sicherheitselement 2, bestehend aus einer transparenten Kunststofffolie 3 mit einer aufgedampften Metallschicht 7. Die Metallschicht 7 weist Aussparungen in Form einer Negativschrift 11 auf. In den Bereichen der Negativschrift 11 ist die Trägerfolie 3 sichtbar.

Fig. 3 zeigt einen Schnitt durch das Sicherheitselement 2 entlang der Linie A-B, allerdings vor der Ausbildung der Negativschrift 11. Die Trägerfolie 3 ist im Bereich der späteren Negativschrift 11 mit einer Druckfarbe 4 bedruckt. Die Druckfarbe 4 enthält eine erste Komponente 5' (beispielsweise Natriumhydrogencarbonat) und eine zweite Komponente 5" (beispielsweise Zitronensäure) eines Zweikomponenten-Gasentwicklungssystems. Alternativ könnte die Druckfarbe 4 auch nur die erste Komponente 5' enthalten. Gemäß einer weiteren Alternative könnte die Druckfarbe 4 auch ein Quellmittel 6 enthalten. Die Trägerfolie 3 und die Druckfarbe 4 werden von der aufgedampften Metallschicht 7 abgedeckt.

Fig. 4 zeigt das in Fig. 3 dargestellte Sicherheitselement, jedoch nach Beginn des Waschvorgangs. Waschflüssigkeit, z. B. Wasser, ist in die Druckfarbe 4 eingedrungen, wodurch die Reaktion zwischen der ersten Komponente 5' und der zweiten Komponente 5" ausgelöst und Kohlendioxid entwickelt wurde. Durch den Druck des Kohlendioxids hat sich in der Metallschicht 7 ein Riss 10 gebildet, durch den große Mengen Waschflüssigkeit eindringen können.

Wenn die Druckfarbe 4 nur die erste Komponente 5' enthält, ist die zweite Komponente 5" in der Waschflüssigkeit enthalten. Durch den Riss 10 strömt dann Waschflüssigkeit mit der zweiten Komponente 5" unter die aufgerissene Metallschicht 7.

Die reichlich einströmende Waschflüssigkeit wäscht nun die Druckfarbe 4 aus und entfernt damit gleichzeitig die über der Druckfarbe 4 liegenden Bereiche der Metallschicht 7.

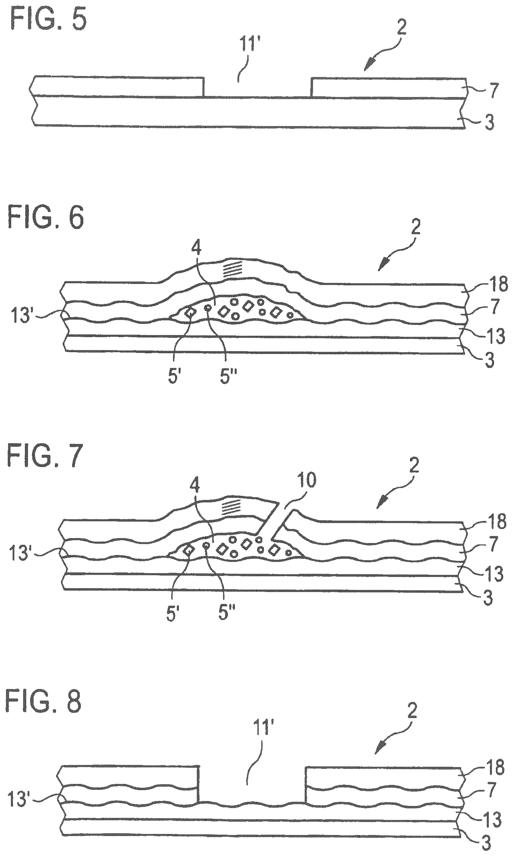

Fig. 5 zeigt dasselbe Sicherheitselement wie die Figuren 3 und 4, jedoch nach Beendigung des Waschvorgangs. Durch das Auswaschen der Druckfarbe 4 ist in der Metallschicht 7 eine Aussparung 11' entstanden. Die Aussparung 11' stellt einen Teilbereich der in Fig. 2 gezeigten Zeichen 11 dar.

Fig. 6 zeigt eine Darstellung ähnlich der Darstellung in Fig. 3. Das Sicherheitselement 2 gemäß Fig. 6 weist eine Trägerfolie 3 mit einer darauf aufgebrachten Lackschicht 13 auf. In die Lackschicht 13 sind Prägestrukturen, insbesondere Beugungsstrukturen 13', eingeprägt. Dabei kann es sich beispielsweise um Hologramme oder beliebige Gitterstrukturen, wie Pixelgramme, Kinegramme oder dergleichen, handeln. Als Prägestrukturen sind deshalb auch sogenannte Mattstrukturen denkbar, die bei Betrachtung im Wesentlichen keine diffraktiven Effekte, sondern Streueffekte zeigen und ein mattes, vorzugsweise keinerlei Farbigkeit zeigendes Erscheinungsbild aufweisen. Im Bereich der späteren Negativschrift 11 ist die Lackschicht 13 mit einer Druckfarbe 4 bedruckt. Dabei handelt es sich beispielsweise um dieselbe Druckfarbe, wie sie im Zusammenhang mit Fig. 3 beschrieben wurde. Die Lackschicht 13 und die Druckfarbe 4 werden von einer Metallschicht 7 abgedeckt. Bei dem Metall handelt es sich um ein unedles Metall, beispielsweise Aluminium, das durch physikalische Dampfabscheidung (PVD) aufgebracht wird. Auf der Aluminiumschicht wiederum befindet sich eine Schicht 18 aus Buntfarbe. Diese Schicht imitiert einen gewünschten Farbton. Soll beispielsweise eine Goldbeschichtung imitiert werden, wird auf die Aluminiumschicht 7 eine gelbe Buntfarbe (bzw. gelbe Metalleffektfarbe) aufgedruckt, soll eine Kupferbeschichtung imitiert werden, wird auf die Aluminiumschicht 7 eine braune Buntfarbe (bzw. braune Metalleffektfarbe) aufgedruckt.

Fig. 7 zeigt das in Fig. 6 dargestellte Sicherheitselement, jedoch nach Beginn des Waschvorgangs. Waschflüssigkeit ist durch die Schicht 18 aus Buntfarbe und die aufgedampfte Aluminiumschicht 7 hindurch gedrungen, wodurch in der Druckfarbe 4 der im Zusammenhang mit Fig. 4 beschriebene Prozess ausgelöst und ein Riss 10 gebildet wurde, der durch die Schichten 7 und 18 hindurch geht. Damit die Waschflüssigkeit eindringen kann, muß die Buntfarbe eine gewisse Porosität aufweisen. Wenn die Buntfarbe lösliche Farbpigmente enthält, kann dies durch einen Zusatz von porösen Füllstoffen gewährleistet werden. Bei unlöslichen Farbpigmenten schaffen in der Regel bereits die Farbpigmente die erforderliche Porosität, aber zur Verbesserung der Durchlässigkeit für die Waschflüssigkeit können auch hier zusätzliche Füllstoffe, beispielsweise Titandioxid, mit verwendet werden.

Fig. 8 zeigt schließlich das Sicherheitselement 2 der Figuren 6 und 7 nach Beendigung des Waschvorgangs. Durch das Auswaschen der Druckfarbe 4 ist in der Aluminiumschicht 7 und in der Schicht 18 aus Buntfarbe eine Aussparung 11' entstanden. Die Aussparung 11' ist in den Schichten 7 und 18 völlig deckungsgleich und sauber ausgebildet. Durch die Beugungsstruktur 13' ergeben sich spezielle Effekte: handelt es sich bei der Beugungsstruktur 13' beispielsweise um ein Hologramm und bei der Metalleffektfarbe um eine goldfarbene Metalleffektfarbe, so wird ein goldfarbenes Hologramm mit Negativschrift ausgebildet.

Die Figuren 6 und 7 zeigen in der Buntfarbenschicht 18 eine Schraffierung. Durch die Schraffierung wird angedeutet, dass es sich um verschiedene Buntfarben handeln kann, die an dem Schraffierungsbereich aneinandergrenzen. Es stört dabei nicht, dass die verschiedenen Farben nicht passergenau aneinandergrenzen, da der entsprechende Bereich bei der Auswaschung der Druckfarbe mit entfernt wird. Auf diese Weise lassen sich Sicherheitselemente herstellen, die auf verschiedenen Seiten einer Aussparung unterschiedliche Farbtöne aufweisen. Beispielsweise könnte auf diese Weise das in Fig. 2 gezeigte Sicherheitselement in Goldoptik ausgeführt werden, wobei jedoch die Bereiche im Inneren der Buchstaben "D" in Kupferoptik ausgeführt werden könnten.

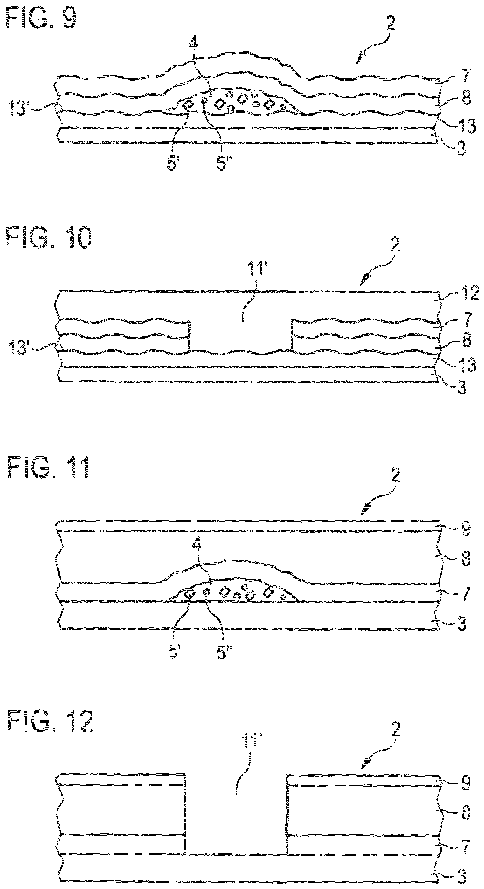

Die Figuren 9 und 10 sind Schnittdarstellungen eines Sicherheitselements 2 gemäß einer weiteren erfindungsgemäßen Ausführungsform. Fig. 9 zeigt den Zustand vor der Ausbildung der Negativschrift und Fig. 10 zeigt den Zustand nach der Ausbildung der Negativschrift. Das in den Figuren 9 und 10 dargestellte Sicherheitselement weist, wie das in den Figuren 6 bis 8 dargestellte Sicherheitselement, eine Trägerfolie 3, eine darauf befindliche Lackschicht 13 mit eingeprägter Prägestruktur, insbesondere Beugungsstruktur 13', sowie eine Metallschicht und eine Farbschicht auf. Im Unterschied zu dem in den Figuren 6 bis 8 dargestellten Sicherheitselement ist bei dem in den Figuren 9 und 10 dargestellten Sicherheitselement die Metallschicht 7 die oberste Schicht. Zwischen der Metallschicht 7 und der geprägten Lackschicht 13 befindet sich die Farbschicht, die beispielsweise durch Sublimation aufgebracht oder aufgedruckt werden kann. Bei der gezeigten Ausführungsform ist die Farbe eine Magnetfarbe (Funktionsfarbe) 8, es kann aber auch eine beliebige Buntfarbe bzw. Metalleffektfarbe 18 verwendet werden.

In den Bereichen, in denen die Negativschrift 11 ausgebildet werden soll, ist eine Druckfarbe 4 aufgedruckt. In Fig. 9 ist wiederum eine Druckfarbe gezeigt, die eine erste Gasentwicklungskomponente 5' und eine zweite Gasentwicklungskomponente 5" enthält, es kann jedoch auch eine beliebige andere Druckfarbe, beispielsweise eine Druckfarbe mit einem Quellmittel oder eine thermisch oder durch Strahlung aktivierbare Druckfarbe verwendet werden. Wird diese Druckfarbe aktiviert, beispielsweise durch Behandlung mit Waschflüssigkeit (bzw. thermisch oder durch Bestrahlung), reißen die Schichten aus Metall 7 und aus magnetischer Funktionsfarbe 8 auf, die Waschflüssigkeit erhält ungehinderten Zutritt zu der Druckfarbe 4, und die Druckfarbe 4 wird zusammen mit der darüberliegenden Abdeckung aus Metallschicht 7 und Magnetfarbenschicht 8 entfernt. Das Ergebnis ist in Fig. 10 gezeigt. Das Sicherheitselement 2 weist Aussparungen 11' auf, die in der Schicht aus magnetischer Druckfarbe 8 und in der darüberliegenden Metallschicht 7 sauber und völlig deckungsgleich ausgebildet sind. Da viele Funktionsfarben, wie die hier gezeigte Magnetfarbe, einen dunklen Farbton aufweisen, ergeben sich interessante Kontrasteffekte, wenn das Sicherheitselement auf einen hellen Untergrund aufgeklebt wird. Wird beispielsweise ein Sicherheitselement 2 mit Hologrammstruktur 13', Magnetfarbenschicht 8 und Metallschicht 7 aus Aluminium mit der Trägerfolie 3 auf ein helles Wertdokument aufgeklebt, ist in Aufsicht in den Bereichen des Sicherheitselements, in denen sich die Magnetfarbe 8 befindet, ein silbernes Hologramm zu sehen, während in den Bereichen der Negativschrift (Aussparungen 11') das Hologramm praktisch unsichtbar wird.

Zur Verklebung mit einem zu sichernden Wertdokument wird bei den erfindungsgemäßen Sicherheitselementen auf der mit dem Wertdokument zu verklebenden Fläche und/oder auf dem Wertdokument selbst an der zur Verklebung vorgesehenen Fläche eine Kleberschicht und/oder eine Primerschicht vorgesehen. Das Sicherheitselement kann so aufgeklebt werden, dass die Verklebung an der Trägerfolie 3 erfolgt, oder auch umgekehrt, so dass die Trägerfolie 3 nach der Verklebung die oberste Schicht darstellt. In einem derartigen Fall wird, wie in Fig. 10 gezeigt, der die Haftung an dem Wertdokument vermittelnde Kleber und/oder Primer 12 die Aussparungen 11' füllen. Wird das Sicherheitselement, wie in Fig. 10 angedeutet, mit der Trägerfolie 3 nach oben weisend auf einen zu schützenden Gegenstand aufgeklebt, empfiehlt es sich, anstelle der Magnetfarbe 8 eine Schicht aufzubringen, mit der sich optische Effekte erzielen lassen, beispielsweise eine Schicht aus Metallimitationsfarbe in Edelmetalloptik oder eine Schicht, mit der sich Farbkippeffekte erzielen lassen.

Die Figuren 11 und 12 sind Schnittdarstellungen eines Sicherheitselements 2 gemäß einer weiteren erfindungsgemäßen Ausführungsform. Fig. 11 zeigt den Zustand vor der Ausbildung der Negativschrift 11 (analog Fig. 3) und Fig. 7 zeigt den Zustand nach der Ausbildung der Negativschrift 11 (analog Fig. 5). Das in den Figuren 11 und 12 dargestellte Sicherheitselement 2 ist in Aufsicht nicht von dem in den Figuren 2 bis 5 dargestellten Sicherheitselement zu unterscheiden. Anstelle von nur einer Metallschicht 7 ist aber auf der Trägerfolie 3 eine Abdeckung aus 3 Schichten ausgebildet, die aus einer Metallschicht 7, einer Schicht aus magnetischer Druckfarbe 8 auf der Metallschicht 7 und einer weiteren Metallschicht 9 auf der Magnetfarbenschicht 8 besteht. Die Dicke der Metallschichten 7 und 9 liegt jeweils in dem Bereich von etwa 1 nm bis etwa 5 µm. Die Dicke der Magnetfarbenschicht 8 liegt in dem Bereich von etwa 0,5 µm bis etwa 10 µm.

In den Bereichen, in denen die Negativschrift 11 ausgebildet werden soll, ist eine Druckfarbe 4 aufgedruckt, die eine erste Gasentwicklungskomponente 5' und eine zweite Gasentwicklungskomponente 5" enthält, wie in Fig. 11 gezeigt ist. Wird dieses Sicherheitselement mit einer Waschflüssigkeit, z. B. Wasser, behandelt, wird in der Druckfarbe 4 ein Gas entwickelt, das die dreischichtige Abdeckung ebenso mühelos aufreißt, wie die einschichtige Abdeckung in Fig. 4 aufgerissen wird. Dadurch erhält die Waschflüssigkeit ungehinderten Zutritt zu der Druckfarbe 4, und die Druckfarbe 4 wird zusammen mit der darüberliegenden dreischichtigen Abdeckung entfernt. Das Ergebnis ist ein Sicherheitselement 2 mit Aussparungen 11' in Form der Negativschrift 11, wie es in Fig. 12 gezeigt ist. Dieses Sicherheitselement weist zusätzlich zu der visuell prüfbaren Negativschrift 11 ein maschinell prüfbares magnetisches Sicherheitsmerkmal (magnetische Druckfarbe 8) auf. Da sich die magnetische Druckfarbe 8 zwischen zwei Metallschichten befindet, ist das optische Erscheinungsbild des Sicherheitselements auf beiden Seiten des Sicherheitselements im Wesentlichen identisch.

Anstelle der Metallschichten 7 und 9 sowie der Magnetschicht 8 wäre auch ein drei oder mehrere Schichten umfassender Interferenzschichtaufbau denkbar, in den die erfindungsgemäßen Aussparungen entsprechend dem in den Figuren 11 und 12 gezeigten Verfahren eingebracht werden.

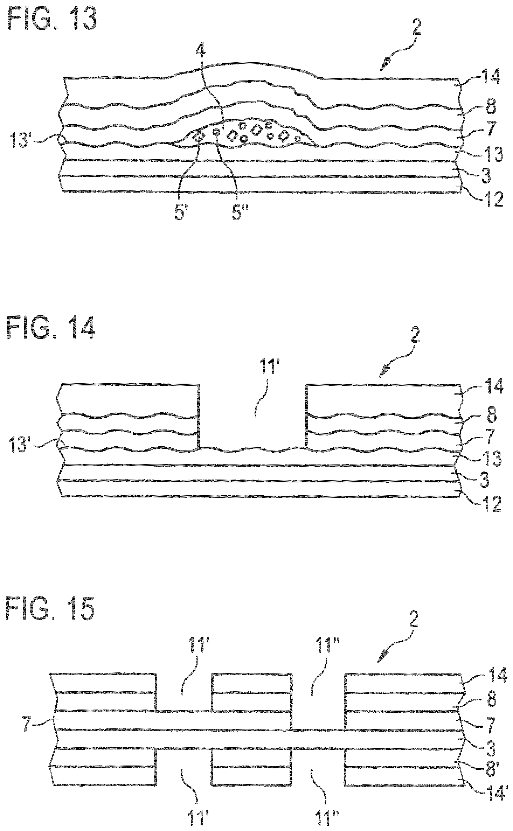

Die Figuren 13 und 14 sind Schnittdarstellungen eines Sicherheitselements 2 gemäß einer weiteren erfindungsgemäßen Ausführungsform. Fig. 13 zeigt den Zustand vor der Ausbildung der Negativschrift 11 und Fig. 14 zeigt den Zustand nach der Ausbildung der Negativschrift 11. Das in den Figuren 13 und 14 gezeigte Sicherheitselement weist folgenden Schichtaufbau auf: Trägerfolie 3, Lackschicht 13 mit geprägter Struktur, insbesondere Hologrammstruktur 13', Schicht aus Aluminium 7, Schicht aus Magnetfarbe 8 und Flüssigkristall-Schicht 14, in der genannten Reihenfolge. Zur Verklebung mit einem Substrat, wie einem Wertdokument, ist an der entgegengesetzten Seite der Trägerfolie 3 eine Klebstoffschicht 12 vorgesehen.
In den Bereichen des Sicherheitselements 2, in denen die Negativschrift ausgebildet werden soll, ist auf der Lackschicht 13 eine erfindungsgemäße reaktive Druckfarbe 4, wie vorstehend ausgeführt, aufgedruckt. Bei Aktivierung der reaktiven Druckfarbe durch Eindringen von Waschflüssigkeit (oder thermisch oder durch Bestrahlung) wird die Abdeckung mit dem Schichtaufbau Aluminium, magnetische Druckfarbe, Flüssigkristall-Schicht aufgerissen, die Waschflüssigkeit kann die Druckfarbe 4 und die darüberliegenden Schichten entfernen, und in den Schichten 7, 8 und 14 werden Aussparungen 11' passergenau ausgebildet, wie in Fig. 14 gezeigt.

Anstelle der Flüssigkristall-Schicht 14 kann auch eine Schicht mit Interferenzpigmenten 15 vorgesehen werden. Derartige Schichten bewirken Farbkippeffekte, die insbesondere vor einem dunklen Untergrund, wie einer dunklen Funktionsfarbe, hier der Magnetfarbe 8, gut sichtbar sind. Wird ein Sicherheitselement 2, wie in den Figuren 13 und 14 gezeigt, mittels der Klebstoffschicht 12 auf ein helles Substrat aufgeklebt, sind die Farbkippeffekte der Flüssigkristall-Schicht oder der Interferenzpigment-Schicht in den Bereichen, die über der dunklen Magnetfarbe 8 angeordnet sind, gut sichtbar. In den Bereichen der Negativschrift sind die Farbkippeffekte selbst bei Vorhandensein dieser Effektschichten vor dem hellen Untergrund des Substrats jedoch wenig oder nicht sichtbar.

Anzumerken ist noch, dass die Flüssigkristall-Schicht, Interferenzpigment-Schicht oder sonstige optisch variable Schicht, die über der dunklen Funktionsfarbe angeordnet sein soll, grundsätzlich auch erst nach dem Ausbilden der Aussparung 11' auf die Funktionsfarbe aufgebracht werden kann. Das Aufbringen der optisch variablen Schicht nach dem Ausbilden der Aussparung 11' vermeidet technische Schwierigkeiten, die gegebenenfalls auftreten, wenn die optisch variable Schicht vor dem Ausbilden der Aussparung aufgebracht wird. Technische Schwierigkeiten könnten sich z. B. aus der Wechselwirkung einer aufgebrachten, optisch variablen Schicht mit der eingesetzten Waschflüssigkeit ergeben. Anders als bei der Ausführungsform der Fig. 14 ist die optisch variable Schicht bei nachträglicher vollflächiger Aufbringung dann auch in dem Bereich der Aussparung 11' vorhanden. Wie bereits erwähnt, wären diese optisch variablen Schichten aber vor dem hellen Untergrund der Trägerfolie bzw. des Substrats im Bereich der Aussparung 11' im Wesentlichen nicht sichtbar.

Fig. 15 ist eine Schnittdarstellung eines erfindungsgemäßen Sicherheitselements 2, wie es vorteilhaft zur Lochüberdeckung in Wertdokumenten verwendet werden kann. In Fig. 15 ist nur der Zustand nach dem Auswaschen der reaktiven Druckfarbe 4 gezeigt. Das Sicherheitselement 2 weist eine transparente Trägerfolie 3 auf. Auf einer Seite der Trägerfolie 3 befindet sich eine Metallschicht 7, eine Schicht aus Magnetfarbe 8 und eine Flüssigkristallschicht 14, in der angegebenen Reihenfolge. In den Schichten 7, 8 und 14 sind Aussparungen 11' und 11" ausgebildet. An der anderen Seite der Trägerfolie 3 sind eine Schicht aus Magnetfarbe 8' und eine Flüssigkristall-Schicht 14' ausgebildet. Auch in den Schichten 8' und 14' befinden sich Aussparungen 11' und 11", die die Negativschrift 11 bilden.

Ein derartiges Sicherheitselement 2 wird hergestellt, indem zuerst in den Bereichen der späteren Aussparung 11" eine reaktive Druckfarbe 4 aufgebracht und darauf die Metallschicht 7 aufgetragen wird, beispielsweise durch physikalische Dampfabscheidung. Auf die Metallschicht 7 wird in den Bereichen, die später die Aussparungen 11' und 11" bilden, erneut reaktive Druckfarbe 4 aufgetragen. Darauf wiederum werden die Schichten aus Magnetfarbe 8 und die Flüssigkristall-Schicht 14 aufgebracht. Nach dem Auswaschen der Druckfarbe 4 geht man an der anderen Seite der Trägerfolie 3 analog vor, d. h., es wird reaktive Druckfarbe 4 in den Bereichen der späteren Aussparungen 11' und 11" aufgedruckt, und darauf eine Schicht aus Magnetfarbe 8' und eine Flüssigkristall-Schicht 14' aufgetragen. Nach dem Auswaschen der Druckfarbe 4 erhält man ein Sicherheitselement, das von beiden Seiten her betrachtet das gleiche Erscheinungsbild aufweist, jedenfalls wenn die Aussparungen 11' und 11" an beiden Seiten der Trägerfolie 3 deckungsgleich ausgebildet werden. Wird ein derartiges Sicherheitselement über ein Loch in einem Wertdokument geklebt, ist von beiden Seiten her betrachtet der Farbkippeffekt der Flüssigkristall-Schichten 14 bzw. 14' über dem dunklen Untergrund der Magnetfarben-Schichten 8 bzw. 8' gut sichtbar. Im Bereich der Aussparungen 11' ist die Metallschicht 7 sichtbar, und im Bereich der Aussparungen 11" ist das Sicherheitselement 2 wegen der transparenten Trägerfolie 3 insgesamt transparent.

Die Trägerfolie 3 weist hier nicht gezeigte Prägestrukturen, insbesondere Beugungsstrukturen oder sogenannte Mattstrukturen, auf.

Die erfindungsgemäßen Sicherheitselemente können ganz oder teilweise in Wertdokumente, wie z. B. Banknoten, Schecks oder Ausweiskarten, eingebettet werden, wie es beispielsweise in Fig. 1 gezeigt ist, oder sie können auf einer Oberfläche eines Wertdokuments angeordnet werden. Soll ein Sicherheitselement auf der Dokumentenoberfläche angeordnet werden, so wird das Sicherheitselement über eine entsprechende Klebstoffschicht mit dem Dokumentenmaterial verbunden, wobei die Trägerfolie vorzugsweise als Schutzschicht auf der dem Wertdokumenten abgewandten Seite zu liegen kommt. Bei teilweise im Wertdokument eingebetteten Sicherheitselementen, z. B. einem Faden, wird im Allgemeinen von sogenannten "Fenstersicherheitsfäden" gesprochen.

Die erfindungsgemäßen Sicherheitsfolien bzw. Sicherheitselemente können als Transfermaterial hergestellt werden. Bei einem Transfermaterial wird der Schichtaufbau des späteren Sicherheitselements in der umgekehrten Reihenfolge, in der der Schichtaufbau später auf einem zu sichernden Wertdokument vorliegen soll, auf einem Trägermaterial vorbereitet, wobei der Schichtaufbau des Sicherheitselements in Endlosform oder auch bereits in der endgültigen als Sicherheitselement verwendeten Umrissform auf dem Trägermaterial vorbereitet werden kann. Der Übertrag des Sicherheitselements auf einen zu sichernden Wertgegenstand erfolgt mithilfe einer Klebstoffschicht, die entweder auf den Wertgegenstand oder auf die oberste Schicht des Transfermaterials aufgebracht wird. Vorzugsweise wird hierfür ein Heißschmelzkleber verwendet. Wird das Sicherheitselement in Endlosform vorbereitet, kann zur Übertragung entweder nur in den zu übertragenden Bereichen eine Klebstoffschicht vorgesehen werden, oder der Klebstoff wird nur in den zu übertragenden Bereichen aktiviert.

Erfindungsgemäße Sicherheitselemente sind auch ganz allgemein zur Produktsicherung verwendbar. Für die Anwendung zur Produktsicherung ist das Sicherheitselement bevorzugt als Etikett ausgebildet, das auf dem Produkt selbst oder auf dessen Verpackung angebracht wird, beispielsweise aufgeklebt wird.

## Patentansprüche

1. Verfahren zur Herstellung einer Sicherheitsfolie für ein Wertdokument (1), wobei die Sicherheitsfolie im Durchlicht und bevorzugt auch im Auflicht visuell erkennbare Zeichen (11) besitzt, folgende Schritte aufweisend:
- Bereitstellen eines Substrats (3,13),
- Bedrucken mindestens einer Seite des Substrats (3,13) mit einer Druckfarbe (4) in Form der zu erzeugenden Zeichen (11),
- Auftragen einer Beschichtung (7) auf die mit der Druckfarbe (4) bedruckte Seite des Substrats (3,13),
- Auftragen mindestens einer weiteren Schicht (8; 9; 14; 15; 18) über der mit der Druckfarbe (4) bedruckten Seite des Substrats (3,13) zusätzlich zu der Beschichtung (7), wobei als weitere Schicht eine Schicht aus einer Funktionsfarbe (8) oder eine Schicht mit Interferenzpigmenten (15) oder eine Flüssigkristalle enthaltende Schicht (14) oder eine Buntfarbe (18) oder eine Metallschicht (9) aufgetragen wird, und die Beschichtung (7) und die mindestens eine weitere Schicht (8; 9; 14; 15; 18) in einer Gesamtdicke von 1 nm bis 15 µm aufgetragen werden,
- Entfernen der Druckfarbe (4) und der über der Druckfarbe liegenden Bereiche der Beschichtung (7) durch Auswaschen mit einer Waschflüssigkeit, bevorzugt einer wässrigen Waschflüssigkeit, so dass in der Beschichtung Aussparungen (11') in Form der Zeichen (11) gebildet werden, und die über der Druckfarbe (4) liegenden Bereiche der Beschichtung (7) und der mindestens einen weiteren Schicht (8; 9; 14; 15; 18) beim Entfernen der Druckfarbe (4) durch Auswaschen passergenau gemeinsam entfernt werden,
wobei eine Druckfarbe (4) verwendet wird, die mindestens einen Füllstoff, mindestens ein Bindemittel und mindestens einen reaktiven Bestandteil und/oder Vorläufer eines reaktiven Bestandteils, der bei Kontakt mit der Waschflüssigkeit einen Prozess bewirkt, der zu einem Aufbrechen der über der Druckfarbe (4) liegenden Bereiche der Beschichtung führt, und/oder einen reaktiven Bestandteil, der bei Bestrahlung oder bei Erwärmung einen Prozess bewirkt, der zu einem Aufbrechen der über der Druckfarbe (4) liegenden Bereiche der Beschichtung führt, enthält, wobei der reaktive Bestandteil der Füllstoff sein kann.

2. Verfahren nach Anspruch 1, **dadurch gekennzeichnet, dass** der mindestens eine reaktive Bestandteil oder Vorläufer eines reaktiven Bestandteils der Druckfarbe (4), der bei Kontakt mit der Waschflüssigkeit einen Prozess bewirkt, der zu einem Aufbrechen der über der Druckfarbe (4) liegenden Bereiche der Beschichtung (7) führt, mindestens eine erste Komponente (5') eines Zweikomponenten-Gasentwicklungssystems (5), das aus der ersten Komponente (5') und einer zweiten Komponente (5") besteht, ist, wobei wenn in der Druckfarbe (4) nur die erste Komponente (5') enthalten ist, die zweite Komponente (5") in der Waschflüssigkeit enthalten ist oder die Waschflüssigkeit ist.

3. Verfahren nach Anspruch 2, **dadurch gekennzeichnet, dass** sowohl die erste Komponente (5') des Zweikomponenten-Gasentwicklungssystems (5) als auch die zweite Komponente (5") des Zweikomponenten-Gasentwicklungssystems (5) in der Druckfarbe (4) enthalten sind, oder die erste Komponente (5') des Zweikomponenten-Gasentwicklungssystems (5) in der Druckfarbe (4) enthalten ist und die zweite Komponente (5") des Zweikomponenten-Gasentwicklungssystems (5) in der Waschflüssigkeit enthalten ist oder die Waschflüssigkeit ist.

4. Verfahren nach einem der Ansprüche 2 oder 3, **dadurch gekennzeichnet, dass** als Zweikomponenten-Gasentwicklungssystem (5) ein System verwendet wird, das mindestens eines der Gase, das ausgewählt ist aus der Gruppe, die aus CO₂, H₂, O₂, N₂, N₂O, NO_{X}, Cl₂, HCl, HBr, H₂S, NH₃, CO, SO₂, CH₄, C₂H₄, C₂H₂ und Gemischen davon besteht, erzeugt.

5. Verfahren nach einem der Ansprüche 2 bis 4, **dadurch gekennzeichnet, dass** die erste oder die zweite Komponente des Zweikomponenten-Gasentwicklungssystems (5) ausgewählt wird aus der Gruppe, die aus Carbonaten, Hydrogencarbonaten und Gemischen davon besteht, und die andere Komponente ausgewählt wird aus der Gruppe, die aus anorganischen Säuren, organischen Säuren und Gemischen davon besteht.

6. Verfahren nach einem der Ansprüche 2 bis 4, **dadurch gekennzeichnet, dass** die erste Komponente des Zweikomponenten-Gasentwicklungssystems (5) ein kationischer Fotoinitiator ist, der bei Bestrahlung mit einer vorbestimmten Wellenlänge eine Säure freisetzt, und die zweite Komponente des Zweikomponenten-Gasentwicklungssystems (5) ausgewählt wird aus der Gruppe, die aus Carbonaten, Hydrogencarbonaten und Gemischen davon besteht, oder die erste oder die zweite Komponente des Zweikomponenten-Gasentwicklungssystems (5) Katalase ist und die andere Komponente ein Peroxid ist.

7. Verfahren nach Anspruch 1, **dadurch gekennzeichnet, dass** der mindestens eine reaktive Bestandteil der Druckfarbe (4), der bei Kontakt mit der Waschflüssigkeit einen Prozess bewirkt, der zu einem Aufbrechen der über der Druckfarbe (4) liegenden Bereiche der Beschichtung (7) führt, mindestens ein Quellmittel (6) ist.

8. Verfahren nach Anspruch 1, **dadurch gekennzeichnet, dass** der Bestandteil, der bei Bestrahlung oder bei Erwärmung einen Prozess bewirkt, der zu einem Aufbrechen der über der Druckfarbe (4) liegenden Bereiche der Beschichtung führt, ein Blähmittel, bevorzugt Azoisobuttersäurenitril, ist.

9. Verfahren nach einem der Ansprüche 1 bis 8, **dadurch gekennzeichnet, dass** als Substrat (3,13) eine Polyesterfolie, bevorzugt eine Polyethylenterephthalatfolie, oder ein geprägter UV-Lack verwendet wird.

10. Verfahren nach einem der Ansprüche 1 bis 9, **dadurch gekennzeichnet, dass** die Beschichtung (7) eine Metallschicht oder eine Metall enthaltende Schicht ist, wobei das Metall bevorzugt ausgewählt wird aus der Gruppe, die aus Aluminium, Nickel, Eisen, Kobalt, Kupfer, Silber, Gold, Chrom und Gemischen davon besteht.

11. Sicherheitsfolie (2) zur Anbringung an oder zur zumindest teilweisen Einbringung in ein Wertdokument (1), wie eine Banknote, einen Scheck oder eine Ausweiskarte, die ein Substrat (3,13), bevorzugt ein transparentes Substrat, mit mindestens einer Beschichtung (7), die Aussparungen (11') hat, aufweist, wobei die Aussparungen im Durchlicht und bevorzugt auch im Auflicht visuell erkennbare Zeichen (11) bilden, **dadurch gekennzeichnet, dass** die Sicherheitsfolie (2) nach einem Verfahren gemäß Anspruch 1 hergestellt ist, die Dicke der mindestens einen Beschichtung 1 nm bis 5 µm beträgt, und die Sicherheitsfolie mindestens eine weitere Schicht (8; 9; 14; 15; 18) zusätzlich zu der Beschichtung (7) aufweist, wobei mindestens zwei der Schichten (7; 8; 9; 14; 15; 18) deckungsgleich übereinander angeordnete Aussparungen (11') haben, und die mindestens eine weitere Schicht eine Schicht aus Funktionsfarbe (8), eine Schicht aus einem Metall (9), eine Flüssigkristallschicht (14), eine Schicht mit Flüssigkristallpigmenten, eine Schicht mit Interferenzpigmenten (15) und/ oder eine Schicht aus Buntfarbe (18) ist.

12. Sicherheitsfolie (2) nach Anspruch 11, **dadurch gekennzeichnet, dass** sie als Sicherheitsfaden ausgebildet ist.

13. Sicherheitsfolie (2) nach Anspruch 11 oder 12, **dadurch gekennzeichnet, dass** das Substrat (3,13) mit durch ein Prägeverfahren erzeugten holographischen Motiven oder Strukturen und/oder doppelbrechenden Strukturen ausgestattet ist.

14. Sicherheitsfolie (2) nach einem der Ansprüche 11 bis 13, **dadurch gekennzeichnet, dass** das Substrat (3,13) beidseitig mit mindestens einer Beschichtung (7), die Aussparungen (11') hat, beschichtet ist.

15. Verwendung der Sicherheitsfolie (2) nach einem der Ansprüche 11 bis 14 zur Produktsicherung von Waren beliebiger Art.

16. Wertdokument (1), wie eine Banknote, ein Scheck oder eine Ausweiskarte, **dadurch gekennzeichnet, dass** es eine Sicherheitsfolie (2) nach einem der Ansprüche 11 bis 14 aufweist.

17. Verfahren zur Herstellung eines Wertdokuments (1), **dadurch gekennzeichnet, dass** eine Sicherheitsfolie (2) nach einem der Ansprüche 11 bis 14 darauf aufgebracht oder zumindest teilweise darin eingebracht wird.

## Claims

1. A method for producing a security foil for a value document (1), wherein the security foil possesses symbols (11) that are visually recognizable in transmitted light and preferably also in incident light, having the following steps:
- supplying a substrate (3, 13),
- printing at least one side of the substrate (3, 13) with a printing ink (4) in the form of the symbols to be produced (11),
- applying a coating (7) to the side of the substrate (3, 13) printed with the printing ink (4),
- applying at least one further layer (8; 9; 14; 15; 18), in addition to the coating (7), over the side of the substrate (3, 13) printed with the printing ink (4), there being applied as the further layer a layer of a function ink (8) or a layer with interference pigments (15) or liquid crystal containing layer (14) or a color ink (18) or a metal layer (9), and the coating (7) and the at least one further layer (8; 9; 14; 15; 18) being applied in a total thickness of 1 nm to 15 µm,
- removing the printing ink (4) and the areas of the coating (7) that lie over the printing ink by washing out with a wash liquid, preferably an aqueous wash liquid, so that gaps (11') in the form of the symbols (11) are formed in the coating, and the areas of the coating (7) and of the at least one further layer (8; 9; 14; 15; 18) that lie over the printing ink (4) are removed jointly in exact register upon removal of the printing ink (4) by washing out,
wherein there is employed a printing ink (4) that contains at least one filler, at least one binding agent and at least one reactive constituent and/or precursor of a reactive constituent which, upon contact with the wash liquid, causes a process leading to a breaking open of the areas of the coating that lie over the printing ink (4), and/or a reactive constituent which, upon irradiation or upon heating, causes a process leading to a breaking open of the areas of the coating that lie over the printing ink (4), wherein the reactive constituent can be the filler.

2. The method according to claim 1, **characterized in that** the at least one reactive constituent or precursor of a reactive constituent of the printing ink (4) which, upon contact with the wash liquid, causes a process leading to a breaking open of the areas of the coating (7) that lie over the printing ink (4) is at least a first component (5') of a two-component gas generation system (5) consisting of the first component (5') and a second component (5"), wherein when only the first component (5') is contained in the printing ink (4), the second component (5") is contained in the wash liquid or is the wash liquid.

3. The method according to claim 2, **characterized in that** both the first component (5') of the two-component gas generation system (5) and the second component (5") of the two-component gas generation system (5) are contained in the printing ink (4), or the first component (5') of the two-component gas generation system (5) is contained in the printing ink (4) and the second component (5") of the two-component gas generation system (5) is contained in the wash liquid or is the wash liquid.

4. The method according to either of claims 2 to 3, **characterized in that** the two-component gas generation system (5) employed is a system generating at least one of the gases selected from the group consisting of CO₂, H₂, O₂, N₂, N₂O, NOₓ, Cl₂, HCl, HBr, H₂S, NH₃, CO, SO₂, CH₄, C₂H₄, C₂H₂ and mixtures thereof.

5. The method according to any of claims 2 to 4, **characterized in that** the first or the second component of the two-component gas generation system (5) is selected from the group consisting of carbonates, hydrogencarbonates and mixtures thereof, and the other component is selected from the group consisting of inorganic acids, organic acids and mixtures thereof.

6. The method according to any of claims 2 to 4, **characterized in that** the first component of the two-component gas generation system (5) is a cationic photoinitiator which, upon irradiation with a predetermined wavelength, releases an acid, and the second component of the two-component gas generation system (5) is selected from the group consisting of carbonates, hydrogencarbonates and mixtures thereof, or the first or the second component of the two-component gas generation system (5) is catalase and the other component is a peroxide.

7. The method according to claim 1, **characterized in that** the at least one reactive constituent of the printing ink (4) which, upon contact with the wash liquid, causes a process leading to a breaking open of the areas of the coating (7) that lie over the printing ink (4) is at least one swelling agent (6).

8. The method according to claim 1, **characterized in that** the constituent which, upon irradiation or upon heating, causes a process leading to a breaking open of the areas of the coating that lie over the printing ink (4) is an expanding agent, preferably azoisobutyric acid nitrile.

9. The method according to any of claims 1 to 8, **characterized in that** the substrate (3, 13) employed is a polyester foil, preferably a polyethylene terephthalate foil, or an embossed UV lacquer.

10. The method according to any of claims 1 to 9, **characterized in that** the coating (7) is a metal layer or a metal containing layer, the metal being preferably selected from the group consisting of aluminum, nickel, iron, cobalt, copper, silver, gold, chromium and mixtures thereof.

11. A security foil (2) for attachment to, or at least partial incorporation in, a value document (1), such as a bank note, a check or an identification card, which has a substrate (3, 13), preferably a transparent substrate, with at least one coating (7) having gaps (11'), wherein the gaps form symbols (11) that are visually recognizable in transmitted light and preferably also in incident light, **characterized in that** the security foil (2) is produced by a method according to claim 1, the thickness of the at least one coating amounts to 1 nm to 5 µm, and the security foil has at least one further layer (8; 9; 14; 15; 18) in addition to the coating (7), wherein at least two of the layers (7; 8; 9; 14; 15; 18) have gaps (11') arranged congruently one over the other, and the at least one further layer is a layer of function ink (8), a layer of a metal (9), a liquid crystal layer (14), a layer with liquid crystal pigments, a layer with interference pigments (15) and/or a layer of color ink (18).

12. The security foil (2) according to claim 11, **characterized in that** it is configured as a security thread.

13. The security foil (2) according to claim 11 or 12, **characterized in that** the substrate (3, 13) is equipped with holographic motifs or structures and/or double refractive structures, produced by an embossing method.

14. The security foil (2) according to any of claims 11 to 13, **characterized in that** the substrate (3, 13) is coated on both sides with at least one coating (7) having gaps (11').

15. Use of the security foil (2) according to any of claims 11 to 14 for product protection of goods of any kind.

16. A value document (1), such as a bank note, a check or an identification card, **characterized in that** it has a security foil (2) according to any of claims 11 to 14.

17. A method for producing a value document (1), **characterized in that** a security foil (2) according to any of claims 11 to 14 is applied thereto or incorporated at least partly therein.

## Revendications

1. Procédé de fabrication d'un film de sécurité pour un document de valeur (1), dans lequel le film de sécurité possède des signes (11) perceptibles visuellement par transparence et de préférence également en vue de face, comprenant les étapes consistant à :
- mettre à disposition un substrat (3, 13),
- imprimer au moins une face du substrat (3, 13) avec une couleur d'impression (4) prenant la forme des signes (11) à produire,
- déposer un revêtement (7) sur la face du substrat (3, 13), imprimée avec la couleur d'impression (4),
- déposer au moins une autre couche (8 ; 9 ; 14 ; 15 ; 18) pardessus la face du substrat (3, 13) imprimée avec la couleur d'impression (4), en plus du revêtement (7), une couche constituée d'une couleur fonctionnelle (8) ou une couche comprenant des pigments d'interférence (15) ou une couche contenant des cristaux liquides (14) ou une couleur (18) ou une couche métallisée (9) étant appliquée à titre d'autre couche et la au moins une autre couche (8 ; 9 ; 14 ; 15 ; 18) étant appliquée en une épaisseur totale de 1 nm à 15 µm,
- enlever la couleur d'impression (4) et les zones du revêtement (7) se trouvant au-dessus de la couleur d'impression par lessivage avec un liquide de lessivage, de préférence un liquide de lessivage aqueux, de manière que des évidements (11') prenant la forme des signes (11) soient formés dans le revêtement et les zones du revêtement (7) situées au-dessus de la couleur d'impression (4) et de la au moins une autre couche (8 ; 9 ; 14 ; 15 ; 18) soient éliminées conjointement en repérage par lessivage lors de l'élimination de la couleur d'impression (4),
dans lequel on utilise une couleur d'impression (4) comprenant au moins une charge, au moins un liant et au moins un composant réactif et/ou précurseur d'un composant réactif, qui déclenche, par contact avec le liquide de lessivage, un processus qui conduit à une rupture des zones du revêtement (7) se trouvant au-dessus de la couleur d'impression (4), et/ou un composant réactif, qui déclenche, par irradiation ou chauffage, un processus qui conduit à une rupture des zones du revêtement (7) se trouvant au-dessus de la couleur d'impression (4), le composant réactif pouvant être la charge.

2. Procédé selon la revendication 1, **caractérisé en ce que** le au moins un composant réactif ou précurseur d'un composant réactif de la couleur d'impression (4), qui déclenche, par contact avec le liquide de lessivage, un processus qui conduit à une rupture des zones du revêtement (7) se trouvant au-dessus de la couleur d'impression (4), est au moins un premier composant (5') d'un système de dégagement gazeux à deux composants (5), qui est constitué d'un premier composant (5') et d'un deuxième composant (5"), dans lequel, quand seul le premier composant (5') est présent dans la couleur d'impression (4), le deuxième composant (5") est présent dans le liquide de lessivage ou est le liquide de lessivage lui-même.

3. Procédé selon la revendication 2, **caractérisé en ce que** aussi bien le premier composant (5') du système de dégagement gazeux à deux composants (5) que le deuxième composant (5") du système de dégagement gazeux à deux composants (5) sont présents dans la couleur d'impression (4), ou le premier composant (5') du système de dégagement gazeux à deux composants (5) est présent dans la couleur d'impression (4) et le deuxième composant (5") du système de dégagement gazeux à deux composants (5) est présent dans le liquide de lessivage ou est le liquide de lessivage lui-même.

4. Procédé selon l'une des revendications 2 ou 3, **caractérisé en ce que** l'on utilise comme système de dégagement gazeux à deux composants (5) un système qui produit au moins un des gaz choisi dans le groupe constitué par CO₂, H₂, O₂, N₂, N₂O, NOₓ, Cl₂, HCl, HBr, H₂S, NH₃, CO, SO₂, CH₄, C₂H₄, C₂H₂ et des mélanges de ceux-ci.

5. Procédé selon l'une des revendications 2 à 4, **caractérisé en ce que** le premier ou le deuxième composant du système de dégagement gazeux à deux composants (5) est choisi dans le groupe constitué par les carbonates, les hydrogénocarbonates et des mélanges de ceux-ci, et l'autre composant est choisi dans le groupe constitué par les acides minéraux, les acides organiques et des mélanges de ceux-ci.

6. Procédé selon l'une des revendications 2 à 4, **caractérisé en ce que** le premier composant du système de dégagement gazeux à deux composants (5) est un photoinitiateur cationique, qui dégage un acide lors de l'irradiation avec une longueur d'onde prédéterminée, et le deuxième composant du système de dégagement gazeux à deux composants (5) est choisi dans le groupe constitué par les carbonates, les hydrogénocarbonates et des mélanges de ceux-ci, ou le premier ou le deuxième composant du système de dégagement gazeux à deux composants (5) est la catalase et l'autre composant est un peroxyde.

7. Procédé selon la revendication 1, **caractérisé en ce que** le au moins un composant réactif de la couleur d'impression (4), qui déclenche, par contact avec le liquide de lessivage, un processus qui conduit à une rupture des zones du revêtement (7) se trouvant au-dessus de la couleur d'impression (4), est au moins un agent gonflant (6).

8. Procédé selon la revendication 1, **caractérisé en ce que** le composant, qui déclenche, par irradiation ou par chauffage, un processus qui conduit à une rupture des zones du revêtement se trouvant au-dessus de la couleur d'impression (4), est un agent de dilatation, de préférence l'azoisobutyronitrile.

9. Procédé selon l'une des revendications 1 à 8, **caractérisé en ce que** l'on utilise comme substrat (3, 13) un film de polyester, de préférence un film de polyéthylène téréphtalate, ou une laque imprégnée d'UV.

10. Procédé selon l'une des revendications 1 à 9, **caractérisé en ce que** le revêtement (7) est une couche métallisée ou une couche contenant du métal, le métal étant choisi de préférence dans le groupe constitué par l'aluminium, le nickel, le fer, le cobalt, le cuivre, l'argent, l'or, le chrome et des mélanges de ceux-ci.

11. Film de sécurité (2) destiné à l'application sur ou à l'introduction au moins partielle dans un document de valeur (1), comme un billet de banque, un chèque ou une carte d'identité, qui comprend un substrat (3, 13), de préférence un substrat transparent, avec au moins un revêtement (7), qui possède des évidements (11'), dans lequel les évidements forment des signes (11) perceptibles visuellement par transparence et de préférence également en vue de face, **caractérisé en ce que** le film de sécurité (2) est fabriqué selon un procédé selon la revendication 1, l'épaisseur dudit au moins un revêtement atteint 1 nm à 5 µm, et le film de sécurité comprend au moins une autre couche (8 ; 9 ; 14 ; 15 ; 18), en plus du revêtement (7), où au moins deux des couches (7 ; 8 ; 9 ; 14 ; 15 ; 18) ont des évidements (11') disposés les uns au-dessus des autres de manière coïncidente, et la au moins une autre couche est une couche constituée d'une couleur fonctionnelle (8), une couche constituée d'un métal (9), une couche de cristaux liquides (14), une couche comprenant des pigments de cristaux liquides, une couche comprenant des pigments d'interférence (15) et/ou une couche en couleur (18).

12. Film de sécurité (2) selon la revendication 11, **caractérisé en ce qu'**il est formé sous la forme de fil de sécurité.

13. Film de sécurité (2) selon la revendication 11 ou 12, **caractérisé en ce que** le substrat (3, 13) est muni de motifs ou de structures et/ou de structures biréfringentes holographiques produits par un procédé de gaufrage.

14. Film de sécurité (2) selon l'une des revendications 11 à 13, **caractérisé en ce que** le substrat (3, 13) est revêtu sur les deux faces d'au moins un revêtement (7), qui a des évidements (11').

15. Utilisation du film de sécurité (2) selon l'une des revendications 11 à 14 pour la sécurisation des produits de tout type.

16. Document de valeur (1), comme un billet de banque, un chèque ou une carte d'identité, **caractérisé en ce qu'**il comprend un film de sécurité (2) selon l'une des revendications 11 à 14.

17. Procédé de fabrication d'un document de valeur (1), **caractérisé en ce qu'**un film de sécurité (2) selon l'une des revendications 11 à 14 est déposé par-dessus ou introduit au moins partiellement à l'intérieur de celui-ci.
